(19) Europäisches Patentamt / European Patent Office / Office européen des brevets

(11) **EP 2 463 332 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**03.03.2021   Patentblatt 2021/09**

(45) Hinweis auf die Patenterteilung:
**29.10.2014   Patentblatt 2014/44**

(21) Anmeldenummer: **11188670.1**

(22) Anmeldetag: **10.11.2011**

(51) Int Cl.:
*C08J 9/32* (2006.01)       *C09J 7/00* (2018.01)
*C09J 7/02* (2006.01)       *C09J 5/08* (2006.01)
*C08K 7/22* (2006.01)       *B29C 44/22* (2006.01)
*C08K 5/00* (2006.01)

(54) **Verfahren zur Herstellung schäumbarer Polymermassen, Verfahren zur Herstellung geschäumter Polymermassen daraus, geschäumte Polymermassen und Klebeband damit**

Method for producing foaming polymer masses, method for producing foaming polymer masses from it, foaming polymer masses and accompanying adhesive tape

Procédé de fabrication de masses polymères pouvant mousser, procédé de fabrication de masses polymères moussées à partir de celles-ci, masses polymères moussées et bande adhésive en étant équipée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2010   DE 102010062669**
**28.01.2011   US 201113016197**

(43) Veröffentlichungstag der Anmeldung:
**13.06.2012   Patentblatt 2012/24**

(73) Patentinhaber: **tesa SE**
**22848 Norderstedt (DE)**

(72) Erfinder:
• **Kleinhoff, Klaus**
**31552 Rodenberg (DE)**
• **Burmeister, Axel**
**22527 Hamburg (DE)**
• **Czerwonatis, Franziska**
**21075 Hamburg (DE)**

(74) Vertreter: **tesa SE**
**Hugo-Kirchberg-Straße 1**
**22848 Norderstedt (DE)**

(56) Entgegenhaltungen:
WO-A1-02/072701       WO-A1-02/072701
DE-A1-102009 015 233       US-A- 5 753 362
US-A1- 2004 197 545       US-A1- 2004 241 417

EP 2 463 332 B2

**Beschreibung**

Die Erfindung lehrt ein Verfahren zur Herstellung einer mit expandierten polymeren Mikrohohlkugeln geschäumten Polymermasse und eine solche geschäumte Polymermasse. Dabei steht eine solche geschäumte Polymermasse - und ein Verfahren zu deren Herstellung - im Fokus, die viskoelastisch ist und - weiter bevorzugt - permanent klebrig ist. Die Erfindung betrifft weiterhin ein Klebeband, welches eine solche Masse enthält in einem Träger und/oder in einer oder zwei an der Oberfläche angeordneten permanent klebrigen Schichten.

Zum Schäumen von Polymermassen ist es unter anderem bekannt, polymere Mikrohohlkugeln - sogenannte Mikroballons - einzusetzen. Mikroballons weisen eine eigene Polymerhülle auf und darin eine Flüssigkeit, die durch einen Behandlungsschritt - in der Regel durch Wärmezufuhr oder durch Wärmeerzeugung - zur Expansion in die Gasphase gebracht wird bei gleichzeitig so weitgehender Erweichung der Polymerhülle, dass diese das von ihr eingeschlossene Volumen vergrößern kann. Mit Mikroballons geschäumte Polymere sind seit langem bekannt und beschrieben, auch als permanent klebrige Massen. Die Worte "permanent klebrige Masse" bedeuten dasselbe wie "Selbstklebemasse" oder "druckempfindliche Klebmasse". Zum Stand der Technik gehören DE 21 05 877 C, EP 1 102 809 A1 und DE 195 31 631 A1.

Die bekannten Typen mit Mikroballons geschäumter Polymere, insbesondere Selbstklebemassen, weisen neben den durch Mikroballons erzeugten Hohlräumen (häufig "Kavernen" genannt) auch solche Hohlräume auf, die nicht durch eine eigene Polymerhülle umgeben sind. Die Anwesenheit von Kavernen, die nicht durch eine eigene Polymerhülle umgeben sind, begünstigt nach Erkenntnis der Erfinder das Entstehen offenzelliger Schäume. Nach Erkenntnis der Erfinder wären aber solche geschäumten Polymere besser, die nur durch Mikroballons erzeugte Kavernen aufweisen, weil diese eine gleichmäßigere Größenverteilung der Hohlzellen erreichen und eine höhere Kohäsion ohne Nachteile in der Adhäsion. Zudem ist in einigen wenigen Anwendungen der mit Geschlossenzelligkeit erreichbare höhere Permeationswiderstand für Gase und Flüssigkeiten erwünscht. Weiterhin neigen solche Kavernen ohne eigene Polymerhülle unter dem Einfluss von Druck und/oder Wärme zum Kollabieren, und/oder sie vereinigen sich zu großen Blasen.

Materialien, die - wie beispielsweise in der Schrift DE 21 05 877 C angegeben - nicht mittels Mikroballons, sondern auf andere Weise geschäumt wurden, sind demgegenüber für ein irreversibles Zusammenfallen unter Druck und Temperatur anfälliger. Auch ist deren Kohäsionsfestigkeit niedriger.

Mittels Mikroballons geschäumte Polymermassen zeigen die gleichen Nachteile, wenn zu viele Mikroballons im Verfahren kollabieren. Gemäß EP 1 102 809 A1 erwarten Fachleute solches Kollabieren, wenn die Mikroballons zu einem so frühen Zeitpunkt expandieren, dass sie danach noch erheblichen Spannungen - sei es durch Scherung, sei es durch hitzebedingten Expansionsdruck - ausgesetzt werden. Die Weichheit der Membran infolge der im Verfahren in der Regel herrschenden hohen Temperaturen sowie deren Dünnheit infolge deren mit der Expansion einhergehenden Dehnung lassen die Membran leicht reißen, wonach das Treibgas der Mikroballons als unstabilisierte Gasblase im Polymerschaum frei würde. Darum soll eine zu frühe Expansion unterdrückt werden.

Aus der DE 195 31 631 A1 ist ein Verfahren bekannt, bei dem zwar durch eine späte Anordnung des Expansionsschrittes ein Zerreißen der Mikroballon-Membranen ausgeschlossen erscheint, welches aber beim Einarbeiten der granulatartigen Mikroballons und anderer Zuschläge Luft mit in die Polymermatrix einbringt und so nachteiligerweise doch wieder auch solche Kavernen erzeugt, deren Umgrenzungsfläche nicht durch eine eigene Polymerhülle stabilisiert und abgedichtet ist.

Aus der DE 10 2009 015 233 ist ein Verfahren zur Herstellung eines geschäumten Massesystems bekannt bei dem in einem ersten Mischaggregat expandierbare Mikroballons in ein Massesystem eingebracht werden, und das mit den Mikroballons versetzte Massesystem unter Überdruck erhitzt wird und die Mikroballons beim Austritt aus dem ersten Mischaggregat expandiert werden.

Aufgabe der Erfindung ist es, eine geschäumte Polymermasse - vorzugsweise eine Selbstklebemasse - zur Verfügung zu stellen, die frei ist von solchen Hohlräumen, die nicht durch Mikroballons erzeugt sind. Neben expandierbaren Mikroballons sollen für die Schäumungserreichung also allenfalls nicht-expandierbare Mikroballons, zum Beispiel Glashohlkugeln, eingesetzt werden, freie Gasblasen aber unterdrückt werden.
Eine aus einem expandierbaren Mikroballon hervorgegangene Kaverne weist eine membranartige Hülle aus einem Polymer oder einer Polymermischung auf, die - trotz aller durch Erhitzung erreichten Dehnbarkeit - bei den kühleren Anwendungstemperaturen des fertigen erfindungsgemäßen Produktes höhere Elastizität aufweist als die umgebende Polymermassen-Matrix.

Gelöst wird die Aufgabe durch ein Verfahren zur Herstellung einer schäumbaren Polymermasse unter Verwendung expandierbarer Mikrohohlkugeln,

- bei welchem in einem ersten Verfahrensstrang erste Ausgangsstoffe, zu denen zumindest der überwiegende Teil des oder der zu verwendenden Polymeren gehört, vermischt und entgast werden zu einer Vormischung,
- wonach diese Vormischung mit einem solchen Druck beaufschlagt wird, dass die Paarung dieses Druckes mit der Temperatur der Vormischung unterhalb der für die Expansionsauslösung der zu verwendenden Mikrohohlkugeln kritischen Paarung von Druck und Temperatur liegt,

- bei welchem in einem zweiten Verfahrensstrang zweite Ausgangsstoffe, zu denen die zu verwendenden Mikrohohlkugeln gehören, entgast werden,
- wonach die im zweiten Verfahrensstrang behandelten Ausgangsstoffe der im ersten Verfahrensstrang hergestellten Vormischung zugesetzt werden - womit gemeint ist, dass der erste Verfahrensstrang und der zweite Verfahrensstrang zusammengeführt werden - ,
- wonach die zweiten Ausgangsstoffe in der Vormischung vermischt werden.

Das Ergebnis des bis hierher im Anspruch 1 definierten und in den Ansprüchen 2 bis 8 näher ausgestalteten Verfahrens ist eine noch ungeschäumte Polymermasse, die nahezu kein freies Gas enthält. Ihr besonderer Vorzug liegt darin, dass aus ihr eine solche Polymermasse geschäumt werden kann, die immer noch außergewöhnlich wenig freies Gas enthält; der erreichbare Anteil an Kavernen ohne eigene Polymerhülle liegt nämlich unterhalb von 2 Vol.-%, bei bevorzugter Verfahrensführung auch unter 0,5 Vol.-%.

Mikroballons sind in etwa kugelförmige Hohlkörper mit einer elastischen und thermoplastischen Polymerhülle; sie werden daher auch als expandierbare polymere Mikrosphären oder als Mikrohohlkugeln bezeichnet.

Mikroballons sind mit niedrigsiedenden Flüssigkeiten oder verflüssigtem Gas gefüllt. Als Hüllenmaterial finden insbesondere Polyacrylnitril, Polyvinyldichlorid (PVDC), Polyvinylchlorid (PVC), Polyamide oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons - insbesondere durch Wärmezufuhr oder -erzeugung, beispielsweise durch Ultraschall oder Mikrowellenstrahlung - erweicht einerseits die äußere Polymerhülle, gleichzeitig geht das in der Hülle befindliche flüssige Treibgas in seinen gasförmigen Zustand über. Bei einer bestimmten Paarung von Druck und Temperatur - im Rahmen dieser Schrift als kritische Paarung bezeichnet - dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, wie zum Beispiel von der Firma Akzo Nobel die Expancel DU-Typen (dry unexpanded), welche sich im Wesentlichen über ihre Größe (6 bis 45 $\mu$m Durchmesser im unexpandierten Zustand) und ihre zur Expansion benötigten Starttemperatur (75°C bis 220°C) differenzieren.

Weiterhin sind unexpandierte Mikroballontypen auch als wässrige Dispersion mit einem Feststoff- beziehungsweise Mikroballonanteil von ca. 40 bis 45 Gew.-% erhältlich, weiterhin auch als polymergebundende Mikroballons (Masterbatche), zum Beispiel in Ethylvinylacetat mit einer Mikroballonkonzentration von ca. 65 Gew.-%. Weiterhin sind sogenannte Mikroballon-Slurry-Systeme erhältlich, bei denen die Mikroballons mit einem Feststoffanteil von 60 bis 80 Gew.-% als wässrige Dispersion vorliegen. Sowohl die Mikroballon-Dispersionen, die Mikroballon-Slurrys als auch die Masterbatche sind wie die DU-Typen zur Schäumung von Klebemassen entsprechend dem erfindungsgemäßen Verfahren geeignet.

Erfindungsgemäß besonders bevorzugt werden solche Mikroballons gewählt, die im nicht expandierten Zustand - bei 25 °C - einen Durchmesser von 3 $\mu$m bis 40 $\mu$m, insbesondere 5 $\mu$m bis 20 $\mu$m, und/oder nach Expansion einen Durchmesser von 10 $\mu$m bis 200 $\mu$m, insbesondere 15 $\mu$m bis 90 $\mu$m, aufweisen.

Durch ihre flexible, thermoplastische Polymerschale besitzen erfindungsgemäß hergestellte Schäume eine höhere Spaltüberbrückungsfähigkeit als solche, die mit nicht expandierbaren, nicht polymeren Mikrohohlkugeln (wie Glas- oder Keramikhohlkugeln) gefüllt sind. Darum eignen sie sich besser zum Ausgleich von Fertigungstoleranzen, wie sie zum Beispiel bei Spritzgussteilen auftreten. Ferner kann ein solcher Schaum thermische Spannungen besser kompensieren.

So können beispielsweise durch die Auswahl des thermoplastischen Harzes der Polymerschale die mechanischen Eigenschaften des Schaums weiter beeinflusst werden. So ist es beispielsweise möglich, Schäume mit höherer Kohäsionsfestigkeit als mit der Polymermatrix allein herzustellen, obwohl der Schaum eine geringere Dichte als die Matrix aufweist. Weiterhin können typische Schaumeigenschaften wie die Anpassungsfähigkeit an raue Untergründe mit einer hohen Kohäsionsfestigkeit für PSA-Schäume kombiniert werden.

Bevorzugt werden der zu schäumenden Polymermasse bis zu 30 Gew.-% Mikroballons, insbesondere zwischen 0,5 Gew.-% und 10 Gew.-%, bezogen auf die Gesamtrezeptur der Polymermasse ohne Mikroballons, für die Schäumung zugesetzt.

Ein erster Aspekt der Erfindung befasst sich mit der Entgasung der Ausgangsstoffe zur Herstellung der geschäumten Polymermasse mittels des erfindungsgemäßen Verfahrens.

Eine erfindungsgemäße, expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischen Glas.

Mit der Bezeichnung "nahezu gasfrei" wird im Rahmen dieser Anmeldung nicht nur ein Zustand einer Mischung umschrieben, in dem diese Mischung im harten mathematischen Sinne kein einziges Molekül von einem Stoff enthält, welcher bei den im Prozess maximal auftretenden Temperaturen (in der Regel 90 bis 140°C, maximal 230 °C) gasförmig vorliegt, sondern es genügt, dass die Konzentration dieser gasförmigen Stoffe so gering ist, dass sie sich in der Mischung lösen, ohne Kavernen freier Luft auszubilden.

Die Eigenschaft "im Wesentlichen gasfrei" für die erfindungsgemäß erhältliche, geschäumte Polymermasse bedeutet, dass der Volumenanteil an freien, also nicht in der Polymermasse gelösten Gasen wie insbesondere Luft bei Standardbedingungen möglichst gering sein soll. Der Anteil an freien, also nicht gelösten, Gasen in der geschäumten Polymermasse - insbesondere in Form offenzelliger Kavernen, sollte bevorzugt einen Anteil von 2 Vol.-%, bevorzugt von 0,5 Vol.-%, nicht überschreiten (jeweils bezogen auf die geschäumte Polymermasse).

Das Entgasen im Rahmen des erfindungsgemäßen Verfahrens wird insbesondere vorteilhaft soweit geführt, dass es zu diesem nahezu gasfreien Zustand führt. Insbesondere liegen die entgasten Ausgangsstoffe nach der Entgasung in allen Verfahrensstufen nahezu gasfrei vor, und weiter vorteilhaft ist die hergestellte geschäumte Polymermasse für alle beabsichtigten Anwendungsbedingungen nahezu gasfrei.

Durch die Verfahrensführung mit mindestens zwei Verfahrenssträngen ist es möglich, zunächst Ausgangsstoffe, die nicht besonders scheranfällig sind, zu vermischen und in dem Mischaggregat - oder einem weiteren Aggregat - gemeinsam zu entgasen. Als Verfahrensstränge werden im Rahmen der Schrift Verfahrenswege bezeichnet, die unabhängig voneinander geführt werden können. Die Temperatur zur Vermischung der Komponenten wird vorteilhaft so hoch gewählt - zum Beispiel mindestens 50 °C, in der Regel 90 bis 140 °C, maximal 230 °C -, dass zumindest die Hauptkomponente, in der Regel ein Polymer, so stark erweicht ist (insbesondere vorteilhaft geschmolzen vorliegt), dass eine gute Durchmischung der Komponenten im Mischaggregat stattfindet. In einem zweiten Verfahrensstrang werden zu einem beliebigen Zeitpunkt die zweiten Ausgangsstoffe entgast. Die zweiten Ausgangsstoffe können dabei einzeln, in Gruppen oder gemeinsam entgast werden. Zweite Ausgangsstoffe sind mindestens die expandierbaren Mikrohohlkugeln. Die im zweiten Verfahrensstrang entgasten zweiten Ausgangsstoffe können sich auf die Mikrohohlkugeln beschränken, aber auch weitere Substanzen umfassen, wie andere granulatförmige Substanzen, Substanzen, die nicht bereits von Anfang an zugesetzt werden sollen, wie beispielweise Vernetzersysteme oder Teile hiervon - insbesondere Vernetzer und/oder Beschleuniger - und/oder Harze. Werden nicht zu den ersten, gemeinsam entgasten Ausgangsstoffen gehörige Substanzen einzeln oder in Gruppen unabhängig von den zweiten Ausgangsstoffen, also mindestens der Mikrohohlkugeln, entgast, so können diese Ausgangsstoffe oder Gruppen der Vormischung auch separat von den zweiten Ausgangsstoffen zugegeben werden und bilden somit weitere Verfahrensstränge; die Zugabe zur Vormischung kann dabei jeweils nach oder bevorzugt vor der Zugabe der Mikroballons geschehen, so dass bevorzugt die Mikroballons (zusammen mit den gegebenenfalls gemeinsam mit ihnen zuzugebenden Dispergierhilfsmitteln und/oder anderen Ausgangsstoffen) zugesetzt werden.

Bei der Zusammenführung ("Mündung") des zweiten und ggf. weiterer Verfahrensstränge mit dem ersten Verfahrensstrang sollte die Temperatur im Mischaggregat wiederum derart gewählt werden, dass die Mischung der ersten Ausgangsstoffe so weich ist (beispielsweise als Schmelzmischung vorliegt), dass eine gute Durchmischung mit den zugeführten Ausgangsstoffen stattfinden kann.

Vorzugsweise werden solche Mischungsbestandteile, die granulatförmig sind, vor ihrer Zugabe in die Mischung in ein Dispergierhilfsmittel eingebettet. Dies gilt insbesondere für alle granulatförmigen Mischungsbestandteile, die zu einem Zeitpunkt in die Mischung gegeben werden, nach dem keine Entgasung der Mischung mehr erfolgt. Es kann aber auch vorteilhaft sein, die granulatförmigen Bestandteile, die zu einem Zeitpunkt in die Vormischung gegeben werden, nach dem noch eine Entgasung der Mischung erfolgt, zur Eingabe in die Mischung in ein - insbesondere entgastes - Dispergierhilfsmittel einzubetten.

Wird im Rahmen dieser Schrift bezüglich der vermischten Ausgangsstoffe von der "Mischung" gesprochen, so umfasst dieser Begriff die zuvor vermischten Ausgangsstoffe, also etwa die Vormischung vor Zugabe weiterer Ausgangsstoffe, die vermischten Ausgangsstoffe nach Zugabe der zweiten Ausgangsstoffe in die Vormischung sowie nach Zugabe eventueller weiterer Ausgangsstoffe, schränkt also Ort oder Zeit im Verfahren nicht weiter ein, sofern dies nicht anders angegeben ist oder sich aus dem Sachverhalt anders ergibt.

Als Granulate werden im Rahmen dieser Schrift Anhäufungen makroskopischer Teilchen bezeichnet, wobei der Begriff "makroskopisch" im physikalischen Sinne zu verstehen ist, also solche Teilchen beschreibt, die den Gesetzen der klassischen Physik gehorchen. Die makroskopischen Teilchen werden im Folgenden auch als "Korn" oder als "Granulatkorn" bezeichnet. Granulatkörner können dabei Einzelteilchen als auch Aggregate zweier oder mehrerer Partikeln sein.

Der Begriff "granulatförmig" bezeichnet dementsprechend solche Materie, die als Anhäufung makroskopischer Teilchen, vorliegt.

Dispergierhilfsmittel sind solche Substanzen, deren Viskosität hinreichend niedrig ist, um die Granulatkörner nahezu gasfrei einbetten zu können. Im Rahmen dieser Schrift wird aufgrund dieses Viskositätserfordernisses gleichbedeutend der Begriff "Flüssigkeit" für die Dispergierhilfsmittel verwendet, wobei solche Substanzen, die unterhalb der Aktivierungstemperatur der Mikrohohlkugeln eine hinreichende Fließfähigkeit zum nahezu gasfreien Einbetten dieser Stoffe aufweisen, von dieser Definition umfasst werden. Hierzu gehören auch bei einer Temperatur unterhalb der Aktivierungsenergie der Mikroballons verflüssigte, bei noch tieferen Temperaturen wie beispielsweise der Raumtemperatur als feste Stoffe vorliegende Substanzen. Vorteilhaft wird die Flüssigkeit derart gewählt, dass sie auch bei niedrigeren Temperaturen, insbesondere bei Raumtemperatur, geeignet sind, die granulatförmigen Stoffe nahezu gasfrei einzubetten.

Die Einbettung in ein Dispergierhilfsmittel verhindert im Moment der Zugabe in die Mischung ein erneutes Wiedereinströmen von Luft in die zwischen den Granulatkörnern ansonsten bestehenden Zwischenräume. Durch die Einbettung - Dispergierung - der granulatförmigen Mischungsbestandteile, insbesondere der Mikroballons, aber auch von Additiven wie Kugeln, Kreide, Stäuben und dergleichen, in eine Flüssigkeit und insbesondere deren Zugabe in die Polymermasse in dem in die Flüssigkeit eingebetteten Zustand kann somit vermieden werden, dass ungewollte Gase wie Luft oder ähnliches in die Polymermasse eingetragen werden.

Die Dispergierhilfsmittel werden dabei insbesondere derart gewählt, dass sie bei den Verfahrensbedingungen nicht zur unbeabsichtigten offenzelligen Kavernenbildung in der Polymermasse führen, insbesondere nicht zur Gasbildung in der Polymermasse neigen und somit keine erneute Gasblasenbildung hervorrufen. Das Dispergierhilfsmittel wird daher insbesondere so gewählt, dass es bei keiner der nach der Mündung des zweiten Verfahrensstranges in den ersten Verfahrensstrang auftretenden Paarung von Druck und Temperatur verdampft. Dies kann insbesondere auch dadurch erreicht werden, dass die Mengen an Dispergiermittel so gewählt werden, dass das Dispergiermittel unter allen Verfahrensbedingungen vollständig in der Polymermasse gelöst und/oder dispergiert vorliegt und nicht ausgast. Weiterhin sollten die Dispergierhilfsmittel derart gewählt werden, dass sie die thermoplastische Polymerhülle der Mikroballons nicht angreifen oder gar zerstören.

Vorteilhaft wird das Dispergierhilfsmittel bereits vor der Einbettung der Granulatkörner entgast, insbesondere das Dispergierhilfsmittel zur Einbettung der Mikrohohlkugeln. Es kann auch derart vorgegangen werden, dass das Dispergierhilfsmittel gemeinsam mit den eingebetteten granulatförmigen Bestandteilen entgast wird. In dem Fall, in dem die Mikrohohlkugeln gemeinsam mit dem Dispergierhilfsmittel entgast werden sollen, ist darauf zu achten, dass die Entgasungsbedingungen (insbesondere Druck und Temperatur) derart gewählt werden, dass durch die Entgasung keine Expansion der Mikrohohlkugeln bewirkt wird.

Vorteilhafte Dispergierhilfsmittel sind beispielweise erst bei hoher Temperatur siedende und bevorzugt schwer entzündliche und/oder schwer brennbare, organische Verbindungen, zum Beispiel Flüssigharze, Öle, Weichmacher - wie Phosphorsäureester, Adipinsäureester, Zitronensäureester, Ölsäure oder andere langkettige Alkansäuren, oder niedrigviskose Polyacrylate - , ethoxylierte tertiäre Amine mit Alkanresten mit mehr als 11 Kohlenstoffatomen und mehreren Ethylenoxideinheiten im Molekül.

Auch Wasser kann - wenn neben der Bedingung hinreichend kleiner Dosis schon vor Verlassen der Mischvorrichtung eine Temperatur von 100°C unterschritten wird - als Dispergierhilfsmittel eingesetzt werden.

Die Entgasung zumindest eines Teils der Mischungsbestandteile, die granulatförmig sind, insbesondere aller derartiger Mischungsbestandteile, findet in einer vorteilhaften Vorgehensweise mit oder nach deren Einbettung in die Flüssigkeit statt. Die Entgasung des restlichen Teils derartiger Mischungsbestandteile beziehungsweise aller derartiger Mischungsbestandteile kann durch die Einbettung in die Flüssigkeit bewirkt werden, indem nämlich insbesondere die zu entfernenden Gase (insbesondere Luft) in den Zwischenräumen zwischen den Granulatkörnern durch die eindringende Flüssigkeit verdrängt wird und aus dieser entweicht. Alternativ oder zusätzlich dazu kann eine Entgasung der mit den granulatförmigen Zusatzstoffen versehenen Dispergiermittel vorgesehen sein. Wie bereits ausgeführt, ist im Falle eingebetteter Mikroballons dann darauf zu achten, dass diese nicht bereits bei der Entgasung expandieren.

Wie an sich bekannt, wird eine Entgasung insbesondere in einer Unterdruckzone erreicht, deren Innendruck im Folgenden p2 heiße. In den Grenzen wirtschaftlicher Machbarkeit würde ein vollständiges Vakuum die schnellste und stärkste Entgasung bringen; in der Praxis kann aber auch schon ein preiswerter herzustellendes und/oder technisch leichter realisierbares Druckgefälle von 0,8 bar zum sonstigen Umgebungsdruck ausreichend sein, dies umso mehr, desto höher ein zuvor erreichter Druck p1 war.

Vorteilhaft können alle Bestandteile der Mischung bereits vor ihrer Zugabe zur Mischung entgast werden. Sofern die Entgasung sämtlicher Mischungsbestandteile vor ihrer Zugabe zur Mischung durchgeführt wird und das Einfangen von Luft während der Zugabe zur Mischung (und auch danach) verhindert ist, kann auf eine Entgasung der Mischung nach Zugabe aller Komponenten verzichtet werden.

Die Entgasung der schon mit Mikroballons abgemischten Mischung würde die Gefahr einer vorzeitigen Expansion und Zerstörung der Mikroballons bergen. Es ist daher vorteilhaft, wenn die Mikroballons und die übrigen Mischungsbestandteile (letztere entweder getrennt oder als gemeinsame Komponente) getrennt entgast werden, anstatt die bereits mit den Mikroballons versetzte Polymerkomponente.

Wenn als Mischvorrichtung ein Extruder verwendet wird, kann die Zugabe einer bereits entgasten Komponente zu Anfang des Extruders ohne Einfangen neuer Luft dadurch geschehen, dass diese Komponente in Form eines solchen Stranges in die Einführschnecke des Extruders gepresst wird, dass damit gerade der Raum zwischen zwei benachbarten Schneckengängen vollständig ausgefüllt wird. Die Zugabe einer bereits entgasten Komponente an so später Stelle des Extruders, wo die schon zuvor in den Extruder eingegebenen Komponenten bereits entgast - und vorzugsweise bereits unter Druck größer 8 bar stehen - sind, gelingt besonders unkompliziert; dazu muss der Druck, mit dem die bereits entgaste Komponente an später Stelle dem Extruder zugeführt wird, höher sein als der Druck im Extruder an besagter Zuführstelle.

Ein weiterer Aspekt der Erfindung betrifft die Unterdrückung der expandierbaren Mikrohohlkugeln in dem Mischaggregat bzw. den Mischaggregaten und, sofern vorhanden, bevorzugt auch noch in einer nachgeschalteten Düse. Die Gesamtheit der Mischaggregate wird im Rahmen der Schrift auch als Mischapparatur bezeichnet. Die Expansion der Mikrohohlkugeln wird unterdrückt, indem nach der Vermischung der ersten Ausgangsstoffe diese Vormischung mit einem solchen Druck beaufschlagt wird, dass die Paarung dieses Druckes mit der Temperatur der Vormischung unterhalb der für die Expansionsauslösung der zu verwendenden Mikrohohlkugeln kritischen Paarung von Druck und Temperatur liegt. Eine solche unterhalb der für die Expansionsauslösung der zu verwendenden Mikrohohlkugeln kritischen Paarung von Druck und Temperatur liegende Paarung wird im Folgenden als unterkritische Paarung von Druck und Temperatur bezeichnet. Die im zweiten Verfahrensstrang behandelten Ausgangsstoffe werden der im ersten Verfahrensstrang hergestellten Vormischung bei der nach der Druckbeaufschlagung vorliegenden unterkritischen, also expansionsunterdrückenden, Paarung von Druck und Temperatur zugesetzt.

In vorteilhafter Vorgehensweise wird das Verfahren derart ausgeführt, dass nach der Mündung des zweiten Verfahrensstranges in den ersten Verfahrensstrang eine unterkritische Druck-Temperatur-Paarung zumindest solange aufrecht erhalten bleibt, bis eine homogene Verteilung der weiteren Ausgangsstoffe in die Vormischung erreicht ist. Dies kann vorteilhaft, muss aber nicht zwingend die bei der Zugabe der Mikroballons vorgegebene Paarung sein, so dass Druck und/oder Temperatur von den oben gewählten Werten abweichen können, sofern die Bedingungen insgesamt noch unterkritisch sind.

Die Mischung kann in einem Mischaggregat oder in mehreren Mischaggregaten durchgeführt werden, wobei der Aggregatkette gegebenenfalls noch eine Düse nachgeschaltet sein kann; zum Beispiel eine Breitschlitzdüse zur Vorausformung der austretenden Polymermasse.

In sehr bevorzugter Vorgehensweise setzt die Expansion der Mikrohohlkugeln erst mit Verlassen der Mischapparatur, also nach Verlassen des letzten Mischaggregates der Kette, bzw., sofern vorhanden, der Düse ein. Hierzu wird eine unterkritische Paarung von Druck und Temperatur bis zu der Stelle, an dem die Polymermasse diese Mischapparatur bzw. die Düse verlässt, aufrechterhalten. Auch dies kann vorteilhaft, muss aber nicht zwingend eine der vorher gewählten Paarungen von Druck und Temperatur sein, so dass Druck und/oder Temperatur von den oben gewählten Werten abweichen können, sofern die Bedingungen insgesamt noch unterkritisch sind.

Sehr vorteilhaft wird die Temperatur der unterkritischen - also expansionsunterdrückenden - Paarung von Druck und Temperatur bei der Zugabe der Mikroballons, insbesondere aber unmittelbar vor dem Verlassen der Mischapparatur bzw. der nachgeschalteten Düse, derart gewählt, dass die Paarung von Standarddruck (101325 Pa) mit dieser Temperatur oberhalb der für die Expansionsauslösung der zu verwendenden Mikrohohlkugeln kritischen Paarung von Druck und Temperatur liegt, so dass unmittelbar nach Verlassen der Mischapparatur bzw. der nachgeschalteten Düse - und somit beim Eintritt in den Standarddruck - der Expansionsvorgang eintritt.

Das Verfahren wird insbesondere derart durchgeführt, dass nach Verlassen des letzten Mischaggregats und nach Verlassen einer gegebenenfalls nachgeschalteten Düse eine vollständige Expansion der Mikroballons stattfindet und die geschäumte Polymermasse ausgeformt wird. Unter im Wesentlichen vollständiger Expansion ist zu verstehen, dass nach Ausformung keine weitere Expansion der Mikrohohlkugeln bei Standardbedingungen (25 °C; 101325 Pa) mehr stattfindet.

Die vorgenannte Prozessführung, also die Schäumung beim Verlassen aller Aggregate, führt dazu, dass die Expansion der Mikroballons weitgehend scherungsfrei ablaufen kann, was weder bei einer Expansion in Mischaggregaten wie Extrudern noch in einer Düse möglich wäre. Mit dem Austritt aus der Düse findet gleichzeitig eine scherungsarme, insbesondere scherungsfreie, Abkühlung der Polymermasse statt. Die bei der herrschenden Temperatur weichen Mikroballonhüllen werden durch die vorgenannten Effekte vor mechanischen Beanspruchungen bewahrt, so dass das Ziel einer möglichst hohen Zahl an geschlossenen Kavernen - und somit unzerstörten Mikroballons - erreicht werden kann.

Nach der vollständigen Expansion der Mikroballons wird die in der Düse gegebenenfalls vorgeformte Polymermasse in ein Walzenauftragswerk geführt, insbesondere in einen Mehrwalzenkalander, und insbesondere auf ein Trägermaterial aufgelegt oder zwischen zwei Trägermaterialien eingelegt. Die Behandlung im Walzenwerk kann derart geführt werden, dass es dabei zu einer weiteren Abkühlung der Polymermase kommt.

Für die Ausformung zur Schicht bietet sich an, jeweils temporäre Trägermaterialien - sogenannte Release - zu verwenden, die für die Anwendung oder Umkaschierung der entstandenen Schichten leicht wieder entfernt werden können. Es kann aber auch auf einen Permanentträger, zwischen zwei für den permanenten Verbleib vorgesehene Schichten (z.B. Selbstklebemassenschichten) oder zwischen eine Permanentschicht und eine temporär vorgesehene Schicht ausgeformt werden. Mittels dieses Walzenauftragswerks findet bevorzugt die endgültige Ausformung der erhaltenen Schicht des geschäumten Polymermasseproduktes statt. Durch den Einsatz derartiger Walzenauftragswerke ist es möglich, nach Austritt aus der Mischkette geschäumte Systeme mit sehr niedrigen Oberflächenrauhigkeiten zu realisieren.

Die geschäumte und ausgeformte Polymermasse hat eine glatte Oberfläche, da die expandierten Mikroballons während der Beschichtung im Walzenspalt nachträglich wieder in die Polymermatrix eingedrückt werden, und weist folglich eine bevorzugte Oberflächenrauigkeit $R_a$ kleiner oder gleich 20 $\mu$m, sehr bevorzugt kleiner oder gleich 10 $\mu$m auf.

Zusammenfassend betrifft die Erfindung also im Besonderen ein Verfahren, bei dem in zumindest einem Mischaggregat eine Mischung, umfassend eine Polymermasse und expandierbare polymere Mikrohohlkugeln, hergestellt wird, und bei dem die Polymermasse durch Expansion der Mikrohohlkugeln geschäumt wird, wobei

- die Mischung spätestens vor dem Schritt des Expandierens der Mikrohohlkugeln in entgastem Zustand vorliegt,
- die Expansion der Mikrohohlkugeln bis zum Verlassen des letzten Mischaggregats unterdrückt wird.

Besonders bevorzugt werden

- in einem Hauptstrang alle ersten Ausgangsstoffe des ersten Verfahrensstranges - also insbesondere Polymere, klebrigkeitssteigernde Harze, nicht expandierbare Füllstoffe, träge Vernetzungsmittel - mit Ausnahme der Mikroballons und möglicherweise aller oder einiger - insbesondere reaktiver, also in der Regel rasch reagierender - Vernetzungsmittel oder Teilmengen davon und gegebenenfalls weiterer Komponenten, dem Mischaggregat, insbesondere einem Extruder, bereits an dessen anfänglicher Fütterungsöffnung zugegeben,
- gemischt bei einem Druck p1,
- in einer Zone verminderten Druckes p2 - zum Beispiel erreichbar durch Erweiterung des Außenzylinders und Anschluss einer Evakuierungspumpe - entgast,
- und dann wieder unter Druck gesetzt - zum Beispiel durch Durchmesservergrößerung oder Dickenvergrößerung der Schnecke und/oder Schneckenwendel(n) und/oder durch Installation eines Blisters oder einer Knetzone - werden, wobei dieser Druck im Folgenden p3 heiße,
- derweil in einem zweiten Zuführungsstrang die Mikroballons und möglicherweise alle oder einige - insbesondere reaktive, also in der Regel rasch reagierende - Vernetzungsmittel oder Teilmengen davon in eine Flüssigkeit gasblasenfrei eingearbeitet und unter einen höheren Druck p4 als p3 gesetzt werden,
- um danach den zweiten Zuführungsstrang in den Hauptstrang münden zu lassen
- und dann aufgrund des hohen Drucks im vereinigten Strang die Expansion der Mikroballons trotz Aufheizung zu verhindern unter Vermeidung der Entstehung von solchen Kavernen, deren Hüllfläche nicht durch eine eigene - von den Mikroballons herrührenden - Polymerschicht abgedichtet und verstärkt ist.
- Abschließend bewirkt die Druckminderung beim Verlassen der Düse am Ende der Extruderkette die Expansion der Mikroballons.

Das erfindungsgemäß erhaltene geschäumte Extrudat ist frei von schädlichen Kavitäten und wird mittels eines Zwei- oder Mehrwalzenauftragswerkes bahnförmig auf einem Träger ausgeformt.

Das erfindungsgemäße Verfahren eignet sich hervorragend zur Schäumung von Polymermassen und führt zu dem Erfolg, dass die geschäumten Massen ausschließlich solche Kavernen enthalten, die durch Mikroballons erzeugt wurden, also eine eigene Polymerhülle aufweisen. Für solche geschlossenzelligen Schäume wird im Vergleich zu offenzelligen Varianten eine bessere Dichtung empfindlicher Güter gegen Staub und flüssige Medien erzielt, sowie eine im Verhältnis zur Dichte höhere Festigkeit.

Mit dem erfindungsgemäßen Verfahren lassen sich als Basispolymermasse hervorragend Homopolymermassen, Copolymermassen, Mischungen von Homopolymeren und/oder Copolymeren schäumen, und zwar jeweils in Reinform oder abgemischt mit weiteren Komponenten. So können beispielweise Polyacrylate bzw. Polymethacrylate und/oder Poylacrylat-/Polymethacrylat-Copolymere, Naturkautschuke, Synthesekautschuke, Polyurethane, Polyolefine, Polyester, Styrolblockcopolymere, Styrolbutadienkautschuke, Ethylenvinylacetat-Copolymere, Silicone und/oder Mischungen aus den vorgenannten Polymeren geschäumt werden, wobei diese Aufzählung beispielhaft und nicht abschließend ist.

Besonders bevorzugt werden mit dem erfindungsgemäßen Verfahren Polymermassen auf Basis von Polymeren, geschäumt, deren überwiegender Teil ein gewichtsmittleres Molekulargewicht $M_w$ von mindestens 250 000 g/mol beträgt. Weiter bevorzugt beträgt das gewichtsmittlere Molekulargewicht mehr als 500 000 g/mol, mehr bevorzugt mehr als 600 000 g/mol, besonders bevorzugt mehr als 700 000 g/mol beträgt. Bevorzugt werden Polymermassen geschäumt, bei denen alle eingesetzten Polymerkomponenten der Polymermasse - mit Ausnahme der gegebenenfalls zugesetzten Harze - in diesem Molekulargewichtsbereich liegen (die Mikroballonhüllen, Vernetzer- oder Beschleunigersubstanzen oder dergleichen werden nicht zu den Polymerkomponenten gezählt). Weiter bevorzugt - in Verbindung mit den genannten gewichtsmittleren Molekulargewichten oder auch unabhängig hiervon, haben die erfindungsgemäß verarbeiteten Polymere, auf denen die Polymermasse basiert, überwiegend oder bevorzugt ausschließlich ein zahlenmittleres Molekulargweicht $M_n$ von mehr als 50 000 g/mol, bevorzugt mehr als 60 000 g/mol, sehr bevorzugt mehr als 70 000 g/mol (wiederum mit Ausnahme optional zugesetzter Harze, Mikroballonhüllen und der vorgenannten weiteren Komponenten).

Die vorgenannten Molekulargewichte ($M_w$ bzw. $M_n$) sind insbesondere vorteilhaft, wenn die Polymere, auf denen die Polymermasse basiert, Polyacrylate sind.

Im Falle von Styrolblockcopolymeren und anderen physikalische Netzwerke bildenden Copolymeren und Blockcopolymeren, können hervorragend auch solche Polymere mit niedrigeren Molekulargewichten eingesetzt werden, zum Beispiel mit gewichtsmitteleren Molekulargewichten von 75 000 g/mol oder mehr, und/oder mit zahlenmittleren Molekulargewicht von 10 000 g/mol oder mehr.

Der Basispolymermasse werden zum Schäumen die Mikroballons zugesetzt, üblicherweise auch Vernetzersubstanzen, wenn das letztendlich vorliegende Produkt aus dem erhalten Schaum in vernetzter Form vorliegen soll.

Das erfindungsgemäße Verfahren ist hervorragend geeignet zur Herstellung von Klebemassen, insbesondere von Selbstklebemassen - letztere werden auch als Haftklebemassen bezeichnet. Selbstklebemassen sind solche Klebemassen, die bei Raumtemperatur permanent klebrig sind. Selbstklebende Erzeugnisse (also mit Selbstklebemassen ausgerüstete Erzeugnisse wie Selbstklebebänder und dergleichen) zeigen viskoelastische Eigenschaften und kleben bereits nach Anwendung von leichtem Druck auf den meisten Oberflächen; eine Aktivierung durch Anfeuchten oder Erwärmen ist nicht erforderlich.

Weiterhin ist das erfindungsgemäße Verfahren sehr gut geeignet, geschäumte - insbesondere viskoelastische - Polymerschichten herzustellen, die beispielsweise hervorragend als Trägerschichten für ein- oder doppelseitige Klebebänder eingesetzt werden können. Hierzu werden diese geschäumten Polymerschichten ein- oder beidseitig mit Klebemassenschichten, insbesondere mit Selbstklebemassenschichten ausgerüstet. Die (Selbst-)Klebemassenschichten können beispielsweise auf die Trägerschicht beschichtet werden oder auf diese laminiert werden. Die geschäumten viskoelastischen Trägerschichten können sowohl selbstklebrig als auch nichtklebrig ausgestaltet sein.

Geschäumte Trägerschichten können auch für sogenannte "Seal Tapes" eingesetzt werden, indem sie einseitig oder jeweils beidseitig mit einer insbesondere bei Raumtemperatur schwachklebrigen oder nichtklebrigen Polymermasse beschichtet wird, die bei Zufuhr von Wärmeenergie aktiviert und klebrig werden; so genannte hitzeaktivierbare Klebemassen. Hitzeaktivierbare Klebemassen entwickeln erst bei thermischer Energiezufuhr hinreichend die für den Anwendungszweck notwendigen Klebeigenschaften. Als hitzeaktivierbare Klebmassen können thermoplastische hitzeaktivierbare Klebemassen - Schmelzkleber; meist lösemittelfreien Klebstoffe, die erst in der Hitze eine hinreichende Fließfähigkeit entwickeln, um hinreichende (Selbst-)Klebkräfte zu entwickeln - und/oder reaktive hitzeaktivierbare Klebemassen - bei Wärmezufuhr findet eine chemische Reaktion statt, die Klebemasse chemisch abbindet und somit den Klebeeffekt bewirkt - eingesetzt werden. Sind die Seal-Tapes einseitig mit einer hitzeaktivierbaren Klebeschicht versehen, so kann die Trägerschicht selbst selbstklebrig gestaltet sein, so dass die zweite Seal-Tape-Seite selbstklebrige Eigenschaften aufweist. Bei mindestens dreischichtigen Seal-Tapes mit einem innenliegenden geschäumten Träger sowie zumindest einer hitzeaktivierbaren Klebemassenschicht auf einer der Seal-Tape-Seiten kann auf der zweiten Seite beispielsweise eine weitere hitzeaktivierbare Klebemasse oder eine Haftklebemasse vorgesehen sein.

Für derartige Seal-Tapes sollten die Trägerschichten und die ggf. vorhandenen Selbstklebemassen eine hinreichende Temperaturbeständigkeit aufweisen, um die Aktivierungstemperatur für die hitzeaktivierbare Klebemasse bzw. die hitzeaktivierbaren Klebemassen unbeschadet zu überstehen.

Die geschäumten Selbstklebemassenschichten und/oder geschäumten Trägerschichten bieten den Vorteil, dass sie in einem großen Dickenbereich hergestellt werden können - unter anderem lassen sich auch sehr dicke Schichten realisieren - und druck- und stoßabsorbierende - dämpfende - Eigenschaften und/oder Rauigkeit ausgleichende Eigenschaften aufweisen. Selbstklebebänder mit derartig geschäumter Selbstklebemassenschicht oder -schichten und/oder mit derartig geschäumter Trägerschicht eignen sich auch gut für stoßdämpfende Aufgaben, beispielsweise zur Verklebung in Geräten mit zerbrechlichen Komponenten wie Fenstern. Auch lassen sich daraus gute - vorzugsweise selbstklebende - Dichtungsbänder, sogenannte "Seal-Tapes" herstellen.

So lassen sich geschäumte Polymermasseschichten in einem Bereich von bis zu mehreren Millimetern herstellen, insbesondere im Bereich von 20 μm bis 5000 μm. bevorzugte erfindungsgemäß hergestellte Polymermasseschichten haben eine Dicke von 50 μm bis 3000 μm, mehr bevorzugt von 400 μm bis 2100 μm.

Ein weiterer Vorteil der geschäumten Selbstklebemassenschichten und/oder geschäumten Trägerschichten ist deren hervorragende Kälteschlagbeständigkeit.

Die Raumgewichte (Rohdichten) erfindungsgemäß hergestellter geschäumter Polymermassen liegen bevorzugt im Bereich zwischen 150 und 950 kg/m$^3$, mehr bevorzugt zwischen 350 und 820 kg/m$^3$.

Mit dem gewählten Ausformungsverfahren im Walzenauftragswerk ist es möglich, eine dichteste Kugelpackung der expandierten Mikrohohlkugeln in der Polymermassenschicht zu unterschreiten, da der Walzendruck beim Ausformen der geschäumten Schicht derart gewählt werden kann, dass die Mikrohohlkugeln zu Polyedern verformt werden.

Erfindungsgemäße Klebebänder können gestaltet sein als

- einschichtige, beidseitig selbstklebende Klebebänder - sogenannte "Transfertapes" - aus einer einzigen Schicht einer geschäumten Selbstklebemasse
- einseitig selbstklebend ausgerüstete Klebebänder - nachfolgend "einseitige Selbstklebebänder" - bei denen die Selbstklebemassenschicht eine geschäumte Polymermasse der vorstehend bezeichneten Art ist, zum Beispiel Zweischichtsysteme aus einer geschäumten Selbstklebemasse und einer nicht geschäumten Selbstklebemasse oder einer hitzeaktivierbaren Klebmasse oder einer geschäumten oder nicht geschäumten Trägerschicht,
- einseitige Selbstklebebänder, bei denen die Trägerschicht eine geschäumte Polymerschicht der vorstehend bezeichneten Art ist,
- beidseitig selbstklebend ausgerüstete Klebebänder - nachfolgend "doppelseitige Selbstklebebänder" - bei denen eine, insbesondere beide Selbstklebemassenschichten eine geschäumte Polymermasse der vorstehend bezeichneten Art ist bzw. sind, und/oder bei denen die Trägerschicht eine geschäumte Polymerschicht der vorstehend bezeichneten Art ist,
- doppelseitige Klebebänder mit einer hitzeaktivierbaren Klebeschicht auf einer der Klebebandseiten und einer Selbstklebemassenschicht auf der anderen Klebebandseite, bei denen die Trägerschicht und/oder die Selbstklebemassenschicht eine geschäumte Polymermasse der vorstehend bezeichneten Art ist,
- doppelseitige Klebebänder mit einer hitzeaktivierbaren Klebeschicht auf beiden Klebebandseiten, bei denen die Trägerschicht eine geschäumte Polymermasse der vorstehend bezeichneten Art ist.

Dabei können die doppelseitigen Produkte, egal ob zur Verklebung oder zur Dichtung gedacht, einen symmetrischen oder einen asymmetrischen Produktaufbau aufweisen.

Beispiele für einschichtige Klebebänder ("Transfertapes") sind 30 $\mu$m, 50 $\mu$m, 70 $\mu$m, 100 $\mu$m, 120 $\mu$m, 400 $\mu$m, 800 $\mu$m und 1200 $\mu$m dick; Beispiele für dreischichtige Klebebänder sind 100 $\mu$m, 1100 $\mu$m, 1600 $\mu$m und 2100 $\mu$m dick (insbesondere mit beidseitiger Selbstklebemassenschicht und geschäumtem Polymerträger).

Vorteilhaft werden die erfindungsgemäß hergestellten Polymermassen vernetzt, um für eine hinreichende Kohäsion zu sorgen. Es ist daher vorteilhaft, der Polymermasse Vernetzer und gegebenenfalls Beschleuniger und/oder Inhibitoren (Verzögerer) zuzusetzen. Im Folgenden werden die zur Initiierung und zur Steuerung zugesetzten Komponenten wie Vernetzer und Beschleuniger gemeinsam auch als "Vernetzungssystem" bezeichnet.

Als Vernetzungsverfahren eignen sich strahleninitiierte Vernetzungsverfahren - insbesondere durch aktinische oder ionisierende Strahlung wie Elektronenstrahlen und/oder ultraviolette Strahlung - und/oder thermisch initiierte Vernetzungsverfahren, wobei zu letzteren auch die Systeme gerechnet werden, bei denen die Aktivierungsenergie bereits bei Raumtemperatur oder darunter ohne zusätzliche Anwendung von Strahlung, wie aktinischer oder ionisierender Strahlung, überwunden werden kann.

Eine strahleninitiierte Vernetzung kann durch an sich bekannte Vorgehensweise erzielt werde, insbesondere durch Bestrahlung mit Elektronenstrahlen und/oder mit UV-Strahlung. Hierzu sind der zu vernetzenden Polymermasse vorteilhaft entsprechende strahlenaktivierbare Vernetzer zugesetzt.

Um bei Schichten - insbesondere bei Trägerschichten oder beidseitig klebend ausgerüsteten Klebebändern, wie Selbstklebebändern oder hitzeaktivierbar klebenden Klebebändern, oder bei viskoelastischen Trägerschichten, eine beidseitig gleichmäßige Oberfläche zu erzielen, kann man derart vorgehen, dass diese Produkte beidseitig, insbesondere unter den gleichen Bedingungen, bestrahlt werden.

Im Falle einer Vernetzung mit Elektronenstrahle kommen vorteilhaft übliche Bestrahlungsvorrichtungen, wie Linearkathodensysteme, Scannersysteme oder Segmentkathodensysteme, jeweils in Ausführung als Elektronenstrahlbeschleuniger, zum Einsatz. Typischen Beschleunigungsspannungen liegen im Bereich zwischen 50 kV und 500 kV, vorzugsweise 80 kV und 300 kV. Die angewandten Streudosen bewegen sich beispielweise zwischen 5 bis 150 kGy, insbesondere zwischen 20 und 100 kGy. Hierfür können die gängigen Vernetzungssubstanzen (Elektronenstrahl-Vernetzer) zu der Polymermasse zugesetzt werden.

Besonders bevorzugt ist die Bestrahlung unter Ausschluss von Luft durch Inertisierung mit Stickstoff oder Edelgasen oder durch beidseitige Eindeckung mit Trennmaterialien, wie trennend ausgerüsteten Folien.

Zur optionalen Vernetzung mit UV-Licht werden den acrylathaltigen Haftklebemassen UV-absorbierende Photoinitiatoren zugesetzt, nämlich insbesondere solche Verbindungen, die durch UV-Aktivierung Radikale bilden.

Hervorragend geeignete UV-Photoinitiatoren sind solche Verbindungen, die bei UV-Bestrahlung eine Photofragmentierungsreaktion zeigen (insbesondere eine Spaltung in $\alpha$-Stellung zu einer photochemisch anregbaren funktionellen Gruppe). Derartige Phoinitiatoren sind solche des Norrish-I-Typs. Weitere hervorragend geeignete Photoinitiatoren sind solche Verbindungen, die bei UV-Bestrahlung mit einer intramolekularen Wasserstoff-Abstraktion, ausgelöst durch eine photochemisch angeregte funktionelle Gruppe, insbesondere in $\gamma$-Stellung, reagieren. Derartige Photoinitiatoren werden zum Norrish-II-Typ gezählt. Weiterhin kann es vorteilhaft sein, eincopolymerisierbare Photoinitiatoren einzusetzen, indem in das zu vernetzende Polymer Monomere einpolymerisiert werden, die funktionelle Gruppen aufweisen, welche durch die Aktivierung mit UV-Strahlen Vernetzungsreaktionen initiieren können.

Es kann von Vorteil sein, wenn die Polymermassen nicht mittels aktinischer und/oder ionisierender Strahlung vernetzt werden. In diesen Fällen kann die Vernetzung unter Ausschluss von UV-Vernetzern und/oder von Elektronenstrahl-Vernetzern durchgeführt werden, so dass auch die erhaltenen Produkte keine UV-Vernetzer und/oder keine ESH-Vernetzer und/oder Reaktionsprodukte hiervon aufweisen.

Die selbstklebenden Erzeugnisse zeigen besonders vorteilhafte Eigenschaften, wenn die die Hohlkörper umgebende Polymermasse homogen vernetzt ist. Zwar lassen sich dicke Schichten - wegen der über der Eindringtiefe rasch abnehmenden Strahlungsintensität - kaum über die übliche Elektronenstrahlen- oder UV-Strahlen-Behandlung homogen vernetzen, aber eine thermische Vernetzung schafft hierfür hinreichende Abhilfe. In der Herstellung besonders dicker erfindungsgemäß geschäumter Schichten, insbesondere solchen, die über 150 $\mu$m dick sind, ist es daher besonders vorteilhaft, wenn die zu schäumende Polymermasse mit einem thermischen Vernetzer-System versetzt wird. Dabei ist natürlich zunächst im Sinne einer besonders stabilen und fehlertoleranten Verfahrensführung ein solches System zu bevorzugen, dessen Aktivierungstemperatur unterhalb der höchsten im Mischprozess auftretenden Temperatur liegt oder es ist umgekehrt der Mischprozess so zu kühlen, dass in ihm die Aktivierungstemperatur noch nicht erreicht wird.

Je genauer alle Parameter - also insbesondere alle relevanten örtlichen Drücke, Temperaturen, Drehzahl, Stoffdosierungen und Viskositäten - im Mischprozess beherrscht werden, desto dichter kann die Prozesstemperatur an die Aktivierungstemperatur heran gelassen werden - wobei eine solche Temperaturerhöhung nicht nur den Kühlleistungsbedarf und die damit verbundenen Kosten senkt, sondern auch eine raschere Verfahrensführung erlaubt, also ein günstigeres Verhältnis zwischen Durchsatz und Mischergröße -, bei Auswahl eines hinreichend trägen Aktivierungs-Systemes sogar bis hin zu einer leichten Überschreitung der Aktivierungstemperatur schon am Ende des Mischprozesses, wie die Erfinder erkannt haben. Die dafür erforderliche Trägheit des Aktivierungs-Systemes wird vorzugsweise durch den antagonistischen Einsatz von Beschleunigern und Verzögerern erreicht. Besagter Antagonismus führt zur Ausbildung einer Abflachung in einem Bereich der Kurve des Vernetzungsgrades über der Einwirkungszeit der erhöhten Temperatur und schafft so auf andere Weise als durch Unterschreitung der Aktivierungstemperatur im Mischprozess den benötigten Rest von Toleranzunempfindlichkeit in der Verfahrensführung.

Als Vernetzer insbesondere für Polyacrylate eignen sich Isocyanate, insbesondere trimerisierte Isocyanate und/oder blockierungsmittelfreie und sterisch gehinderte Isocyanate, Epoxidverbindungen wie Epoxid-Amin-Vernetzersysteme, jeweils bei Anwesenheit funktioneller Gruppen in den Polymer-Makromolekülen, die mit Isocyanatgruppen bzw. Epoxidgruppen reagieren können.

Um die Reaktivität der Isocyanate abzuschwächen und die Topfzeit während der Extrusion zu vergrößern, können vorteilhaft mit thermisch abspaltbaren funktionellen Gruppen blockierte Isocyanate eingesetzt werden. Zur Blockierung eingesetzt werden bevorzugt beispielsweise aliphatische primäre und sekundäre Alkohole, Phenolderivate, aliphatische primäre und sekundäre Amine, Lactame, Lactone, Malonsäureester.

Werden Epoxid-Amin-Systeme als Vernetzersysteme eingesetzt, können die Amine in ihre Salze überführt werden, um eine Erhöhung der Topfzeit zu gewährleisten. Dabei werden leicht flüchtige organische Säuren (Ameisensäure, Essigsäure) oder leicht flüchtige Mineralsäuren (Salzsäure, Derivate der Kohlensäure) zur Salzbildung bevorzugt.

Vorteilhafte Vernetzersysteme und geeignete Verfahren, um mit derartigen Vernetzern eine Verarbeitung der Polymermasse in der Schmelze zu erlauben, sind beispielweise in den Schriften EP 0 752 435 A, EP 1 802 722 A, EP 1 791 921 A, EP 1 791 922 A, EP 1 978 069 A, DE 10 2008 059 050 A beschrieben. Der diesbezügliche Offenbarungsgehalt sei daher explizit in den Offenbarungsgehalt dieser Schrift eingebunden. Dabei wird der Vernetzer oder bei Vernetzersystemen zumindest ein Bestandteil des Vernetzersystems (zum Beispiel entweder der Vernetzer oder der Beschleuniger) erst spät in die Schmelze gegeben und sofort sehr homogen eingemischt (durch eine effiziente Vermischung, beispielsweise im Extruder), um die Verweildauer des reaktiven Systems in der Polymerschmelze sehr kurz und daher die Verarbeitungszeit ("Topfzeit") möglichst lang zu gestalten. Der wesentliche Teil der Vernetzungsreaktion findet dabei erst nach der Ausformung des geschäumten Polymers, insbesondere nach dessen Ausformung zur Schicht, statt, und zwar bevorzugt bei Raumtemperatur. Durch diese Vorgehensweise lassen sich zwei Verfahrensaspekte zueinander optimieren, nämlich zum einen eine möglichst wenig ablaufende Vernetzungsreaktion vor der Ausformung, um ungewollte und unkontrollierte Vorvernetzung und die entsprechende Vergelung (Bildung von höhervernetzten Bereichen - zum Beispiel Stippen - innerhalb der Polymerschmelze) weitgehend zu vermeiden, andererseits aber eine möglichst hohe Vermischungseffizienz des Vernetzers bzw. der Vernetzersystemkomponenten in der relativ kurzen Verweilzeit in der Polymerschmelze vor der Beschichtung, um tatsächlich ein sehr homogen vernetztes Endprodukt zu garantieren.

Die Verwendung thermischer Vernetzer bzw. thermischer Vernetzersysteme ist insbesondere für geschäumte Polymermassen dann vorteilhaft, wenn durch die Kavernen das Eindringen von aktinischer Strahlung (wie zum Beispiel UV-Strahlung) in die Schicht behindert wird. Durch die Phasenübergänge an der Kavernenhüllen kommt es zu Brechungs- und Streueffekten, so dass die inneren Schichtbereiche von der Strahlung nicht oder stark vermindert erreicht werden können, wobei dieser Effekt den vorgenannten Effekt einer an sich begrenzten Eindringtiefe noch überlagert. Hier ist die thermische Vernetzung geschäumter Polymermassen insbesondere zur Erzielung einer homogen vernetzten Polymermatrix von Vorteil.

Die Schäumung der expandierbaren Mikroballons findet bei erhöhten Temperaturen statt, was, wie die Verarbeitung der Polymere in der Schmelze, für thermische Vernetzer ein Problem darstellt. Die Wahl der oben genannten, relativ reaktionsträgen Vernetzer und die Wahl der genannten Vernetzer-Beschleuniger-Systeme zur Kinetik-Regulierung der Vernetzungsreaktion sind daher jeweils für das im Rahmen dieser Schrift beschriebene Schäumungsverfahren besonders vorteilhaft, da diese Vernetzer die entsprechenden Temperaturen insbesondere bei der Schäumung zu überstehen in der Lage sind.

Bei dem erfindungsgemäßen Schäumungsverfahren wird die Schäumung bis zum Verlassen des letzten Mischaggregats unterdrückt. Hierdurch befinden sich an der Oberfläche der geschäumten Polymermasse expandierte Mikroballons. Durch die Verwendung eines Walzenwerks, insbesondere eines Kalanders, zur Ausformung der Polymermasse lassen sich dennoch Schichten mit einer sehr geringen Oberflächenrauhigkeit erzeugen. Hierzu ist es aber nötig, dass die Polymermasse bei der Ausformung hinreichend verarbeitbar (und hinreichend wenig vorvernetzt) ist, dass die Ausformung im Walzenwerk nachhaltig stattfinden kann. Für das erfindungsgemäße Schäumungsverfahren ist es daher besonders vorteilhaft, Vernetzer-Beschleuniger-Systeme einzusetzen, da, wie weiter oben geschildert, hierdurch die Kinetik der Vernetzungsreaktion vom Vernetzungsgrad entkoppelt werden kann und somit eine hinreichend lange Verarbeitungszeit der geschäumten, zu vernetzenden Polymermasse gewährleistet wird.

Als besonders bevorzugt hat sich für das erfindungsgemäße Verfahren ein Vernetzer-Beschleuniger-System herausgestellt, insbesondere für die Vernetzung von Polymeren, insbesondere von Polyacrylaten, mit funktionellen Gruppen, die geeignet sind, mit Epoxidgruppen Verknüpfungsreaktionen einzugehen, umfassend zumindest eine epoxidgruppenhaltige Substanz als Vernetzer und zumindest eine bei einer Temperatur unterhalb der Schmelztemperatur des Polyacrylats für die Verknüpfungsreaktion beschleunigend wirkende Substanz als Beschleuniger. Als epoxidgruppenhaltige Substanzen eigenen sich beispielweise multifunktionelle Epoxide, insbesondere bifunktionelle oder trifunktionelle (also solche Epoxide mit zwei bzw. drei Epoxidgruppen), aber auch höherfunktionelle Epoxide oder Mischungen unterschiedlich funktioneller Epoxide. Als Beschleuniger können bevorzugt Amine (formell als Substitutionsprodukte des Ammoniaks aufzufassen), beispielweise primäre und/oder sekundäre Amine; insbesondere werden tertiäre und/oder multifunktionelle Amine eingesetzt. Einsetzbar sind auch solche Amine, die mehrere Amingruppen aufweisen, wobei diese Amingruppen primäre und/oder sekundäre und/oder tertiäre Amingruppen sein können; insbesondere Diamine, Triamine und/oder Tetramine. Insbesondere werden solche Amine gewählt, die mit den Polymerbausteinen keine oder nur geringfügige Reaktionen eingehen. Als Beschleuniger können weiterhin beispielweise solche auf Phosphorbasis, wie Phosphine und/oder Phosphoniumverbindungen, eingesetzt werden.

Mittels dieses Verfahrens lassen sich insbesondere Polymere auf Basis von Acrylsäureestern und/oder Methacrylsäureestern schäumen und vernetzen, wobei vorteilhaft zumindest ein Teil der Ester die funktionellen Gruppen enthält und/oder Comonomere vorhanden sind, die die funktionellen Gruppen aufweisen. Als funktionelle Gruppen des zu vernetzenden Polymers, insbesondere auf (Meth-)Acrylatbasis, eigenen sich besonders Säuregruppen (Carbonsäure-, Sulfonsäure- und/oder Phosphonsäuregruppen) und/oder Hydroxygruppen und/oder Säureanhydridgruppen und/oder Epoxidgruppen und/oder Amingruppen, gewählt insbesondere abgestimmt auf den jeweiligen Vernetzer. Es ist besonders vorteilhaft, wenn das Polymer einpolymerisierte Acrylsäure und/oder Methacrylsäure enthält.

Es kann jedoch auch vorteilhaft sein, auf Beschleuniger zu verzichten, da diese zum Beispiel zum vergilben neigen können (insbesondere zum Beispiel stickstoffhaltige Substanzen), was beispielsweise für transparente Polymere bzw. (Haft-)Klebemassen für Anwendungen im optischen Bereich störend sein kann. Als Vernetzer, die ohne zusätzlichen Beschleunigerzusatz auskommen und bei deren Einsatz auf Beschleuniger verzichtet werden kann, eignen sich beispielweise Epoxycyclohexylderivate; insbesondere bei Anwesenheit von Carbonsäuregruppen im zu vernetzenden Polymer, insbesondere auf (Meth-)Acrylatbasis. Dies kann zum Beispiel durch mindestens 5 Gew.-% einpolymerisierte Acrylsäure in das Polymer realisier sein. In dem zu vernetzenden Polymer sind vorteilhaft insbesondere keine Protonenakzeptoren, keine Elektronenpaar-Donatoren (Lewisbasen) und/oder keine Elektronenpaarakzeptoren (Lewissäuren) zugegen, insbesondere nicht zugesetzt worden. Die Abwesenheit bezieht sich dabei insbesondere auf extern zugesetzte (also nicht einpolymerisierte bzw. in das Polymergerüst eingebaute) Beschleuniger, besonders bevorzugt sind aber weder extern zugesetzte noch einpolymerisierte, sehr bevorzugt gar keine Beschleuniger zugegen. Als besonders vorteilhaft haben sich als Vernetzer Epoxycyclohexylcarboxylate herausgestellt, insbesondere bevorzugt (3,4-Epoxycyclohexan)methyl-3,4-epoxycyclohexylcarboxylat.

Vorteilhaft kann man unter Einsatz der genannten Vernetzer bzw. Vernetzer-Beschleuniger-Systeme oder anderer eine thermische Vernetzung initiierende Substanzen derart vorgehen, dass man die Vernetzung in der Schmelze des zu vernetzenden Polymers, insbesondere des Polyacrylats, initiiert und dieses danach zu einem Zeitpunkt abkühlt, zu dem die Vernetzung zu weniger als 10 % abgeschlossen ist. Weiter bevorzugt findet die Initiierung in einem Verarbeitungsreaktor statt, der insbesondere eines der nachstehend genannten Mischaggregate ist. Dies kann das Mischaggregat, in dem auch die Mikroballons zugesetzt werden, aber auch ein anderes Mischaggregat sein. Nach der Initiierung wird das zu vernetzende und zu schäumende Polymer dem Verarbeitungsaggregat entnommen und schäumt nach der Entnahme, wobei durch die Entnahme in der Regel bereits ein Temperaturabfall stattfindet. Im Folgenden wird die Polymermasse ausgeformt. Die Vernetzung schreitet dann durch die Wahl des Vernetzer-Beschleuniger-Systems auch nach der Abkühlung, bis der endliche Vernetzungsgrad erreicht ist. Bevorzugt verläuft die Vernetzungsreaktion bei Raumtemperatur, so dass die Abkühlung bis auf Raumtemperatur stattfindet.

Je nach Anwendungsgebiet und gewünschten Eigenschaften können der zu schäumenden Polymermasse weitere Komponenten und/oder Additive zugesetzt sein, und zwar jeweils allein oder in Kombination mit einem, zweien oder mehreren anderen Additiven oder Komponenten.

In einer bevorzugten Vorgehensweise sind der zu schäumenden Polymermasse, insbesondere zur Verwendung als Selbstklebemasse, beispielsweise Harze, wie Klebharze und/oder thermoplastische Harze, beigemischt. Als Harze im Sinne dieser Schrift werden oligo- und polymere Verbindungen mit einem zahlenmittleren Molekulargewicht $M_n$ von nicht mehr als 5 000 g/mol angesehen. Die maximal zusetzbare Harzmenge wird dabei durch die Mischbarkeit mit den - gegebenenfalls mit weiteren Ausgangsstoffen abgemischten - Polymeren begrenzt; es sollte sich jedenfalls zwischen Harz und Polymeren eine homogene Mischung ausbilden.

Als klebrigmachende Harze sind die dem Fachmann grundsätzlich bekannten Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$-, $C_9$- sowie andere Kohlenwasserstoffharze, jeweils für sich oder in Kombination miteinander. Besonders vorteilhaft lassen sich alle mit der Polymermasse kompatiblen (in ihr löslichen löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Bevorzugte Terpenphenolharze sind beispielsweise Dertophene T105 und Dertophene T 110, ein bevorzugtes hydriertes Kolophoniumderivat ist Foral 85.

Weiter optional können pulver- und granulatförmige Füllstoffe, Farbstoffe und Pigmente, besonders auch abrasive und verstärkende, wie z.B. Kreiden ($CaCO_3$) Titandioxide, Zinkoxide und Ruße zugesetzt werden. Bevorzugt können verschiedene Kreideformen als Füllstoff eingesetzt werden, wobei besonders bevorzugt Mikrosöhl-Kreide (Fa. Söhlde) eingesetzt wird. Bei bevorzugten Anteilen bis zu 20 Gew.-% verändern sich die klebtechnischen Eigenschaften (Scherfestigkeit bei RT, Sofortklebkraft auf Stahl und PE) durch den Füllstoffzusatz praktisch nicht. Ebenfalls bevorzugt können verschiedene organische Füllstoffe zugesetzt werden.

Geeignete Additve für die erfindungsgemäße Polymermasse sind außerdem - unabhängig gewählt von anderen Additiven - nicht expandierbare Polymerhohlkugeln, Polymervollkugeln, Glashohlkugeln, Glasvollkugeln, keramische Hohlkugeln, keramische Vollkugeln und/oder Kohlenstoffvollkugeln ("Carbon Micro Balloons").

Weiterhin können schwerentflammbare Füllstoffe, wie beispielsweise Ammoniumpolyphosphat, weiterhin elektrisch leitfähige Füllstoffe, wie beispielsweise Leitruß, Kohlenstofffasern und/oder silberbeschichtete Kugeln, weiterhin ferromagnetische Additive, wie beispielsweise Eisen-(III)-oxide, Alterungsschutzmitteln, Lichtschutzmitteln, Ozonschutzmitteln zugegeben oder eincompoundiert werden. Optional können die üblichen Weichmacher zugesetzt werden. Als Weichmacher können z. B. niedermolekulare Polyacrylate, Phthalate, wasserlösliche Weichmacher, Weichharze, Phosphate oder Polyphosphate zudosiert werden.

Die Beigabe von Kieselsäuren, vorteilhaft gefällter, mit Dimethyldichlorsilan oberflächenmodifizierter Kieselsäure, kann genutzt werden, um die Wärmescherfestigkeit der entsprechenden Polymerschicht einzustellen.

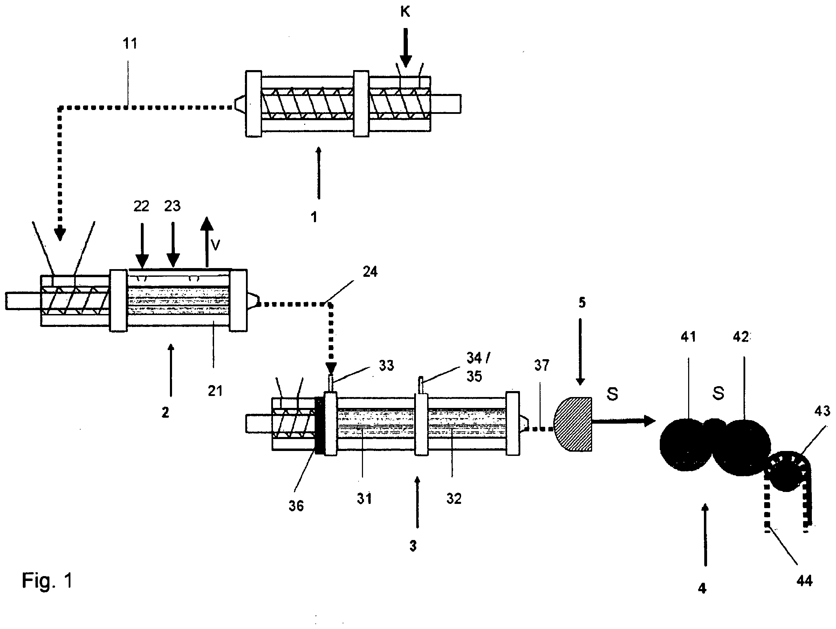

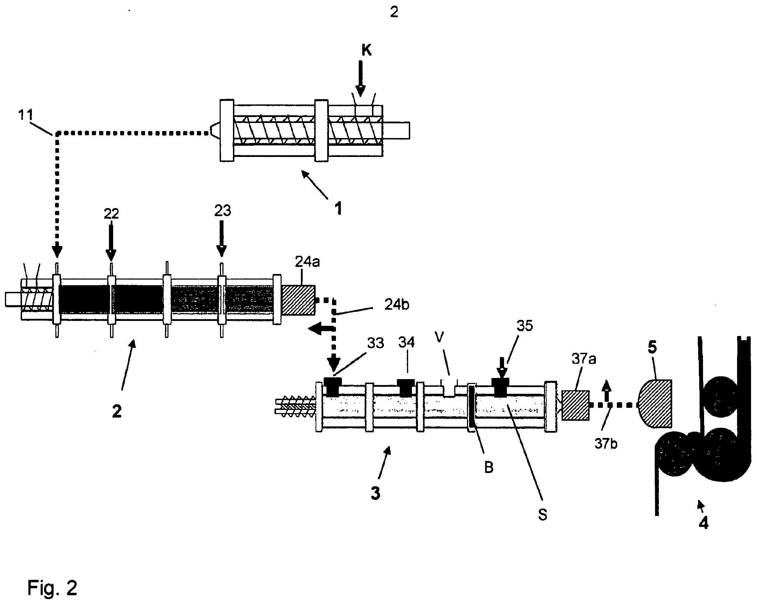

Das erfindungsgemäße Verfahren wird bevorzugt wie folgt durchgeführt (vgl. Figuren 1 und 2): Das Basispolymer K wird aufgeschmolzen und - insbesondere mittels eines Förderaggregates 1 - zu einem Mischaggregat 2 gefördert. In diesem und gegebenenfalls in einem oder mehreren weiteren Mischaggregaten 3 (als Mischaggregate 2, 3 eignen sich insbesondere Extruder; wie Doppelschneckenextruder und/oder Planetwalzenextruder) werden an bestimmten Dosierstellen 22, 23, 34, 35, 36 weitere erforderliche und gegebenenfalls optionale Komponenten zugemischt, wie Harze, Beschleuniger, Vernetzer, Füllstoffe und dergleichen, und auch die Mikroballons. Falls erforderlich, ist zumindest eines der Mischaggregate 2, 3 oder ein weiteres optional vorgesehenes Aggregat (in den Figuren nicht dargestellt) geeignet, die Polymerschmelze zu entgasen. Auf diese Entgasungseinheit kann verzichtet werden, insbesondere wenn alle Mischungsbestandteile vor der Zugabe bereits entgast wurden und das erneute Eindringen von Gasen vermieden wurde. Vorteilhaft findet ein Vakuumdom V zur Erzeugung des Unterdruckes, der die Entgasung bewirkt, Anwendung. Die Zugabe der Mikroballons findet insbesondere bei erhöhtem Druck statt, um bei der Temperatur der Polymerschmelze ein zu frühes Expandieren der Mikrohohlkugeln zu unterdrücken.

Die derart hergestellte Schmelzmischung wird in eine Düse 5 überführt. Bei Verlassen der Düse 5 findet ein Druckabfall statt, so dass die Mikrohohlkugeln nach deren Verlassen, also nach dem Druckabfall, expandieren und für eine Schäumung der Polymermasse sorgen. Die derart geschäumte Masse wird anschließend ausgeformt, insbesondere durch ein Walzwerk 4, wie einem Walzenkalander.

Das erfindungsgemäße Verfahren wird nachfolgend anhand zweier Figuren näher erläutert, ohne sich durch diese beispielhafte Darstellung in der erfindungsgemäßen Lehre unnötig beschränken zu wollen. Es zeigt

Fig. 1 einen für die Verfahrensdurchführung besonders zweckmäßigen Vorrichtungsaufbau und

Fig. 2 überlagert dem zuvor behandelten Vorrichtungsaufbau beispielhaft eine örtliche Zuordnung der einzelnen Verfahrensschritte und dazu insbesondere die Parameter Temperatur und Druck.

Die Anordnung der Aggregate und Verfahrensapparaturbestandteile, insbesondere der Mischaggregate, ist beispielhaft dargestellt und kann je nach Verfahrensführung variiert werden.

Figur 1

In einem ersten Aggregat 1, beispielweise in einem Förderaggregat wie einem Extruder (insbesondere einem Einschneckenförderextruder), wird die Basispolymermasse K aufgeschmolzen und insbesondere mittels dieses Förderaggregats 1 als Polymerschmelze über ein insbesondere beheizbares Verbindungsstück 11 (zum Beispiel einen Schlauch oder ein Rohr) in ein zweites Aggregat 2, insbesondere ein Mischaggregat wie einen Doppelschneckenextruder, gefördert. Über eine oder mehrere Dosierstellen 22, 23 in dem zweiten Aggregat können gemeinsam oder getrennt voneinander Additive zu der Basispolymerschmelze gegeben, wie beispielweise alle Harze oder ein Teil der Harze, das Vernetzersystem oder Teile hiervon (insbesondere Vernetzer und/oder Beschleuniger), Füllstoffe, Farbpasten oder dergleichen.

Vor Verlassen des Aggregats 2, also insbesondere des Doppelschneckenextruders, wird die so abgemischte Polymerschmelze entgast, insbesondere über einen Vakuumdom V bei einem Druck von 175 mbar oder weniger, und anschließend über ein zweites insbesondere beheizbares Verbindungsstück 24 (zum Beispiel einen Schlauch oder ein Rohr) in ein drittes Aggregat 3 gefördert, insbesondere ein zweites Mischaggregat, zum Beispiel einen mit einem Gleitdichtring 36 versehenen Planetwalzenextruder, gefördert. Das dritte Aggregat 3, insbesondere der Planetwalzenextruder, verfügt über eine oder mehrere temperierbare Mischzonen 31, 32 und über eine oder mehrere Einspritzbeziehungsweise Dosiermöglichkeiten 33, 34, 35, um die Polymerschmelze einzugeben und mit weiteren - insbesondere bereits entgasten - Komponenten und/oder Additiven abzumischen.

Über eine Dosierstelle 34 wird beispielsweise ein Harz oder eine Harzmischung zugesetzt. Vorteilhaft wurde das Harz bzw. die Harzmischung zuvor in einem separaten Vakuumdom V entgast. Über eine Dosierstelle 35 (hier nur schematisch an derselben Stelle wie 34 eingezeichnet, es kann sich - und wird sich in der Regel - aber durchaus um eine andere, an anderer Stelle des Extruders gelegene Dosierstelle handeln) werden die in eine Flüssigkeit eingebetteten Mikroballons zugegeben. Über dieselbe oder eine weitere, in Figur 1 nicht dargestellte Dosierstelle können das Vernetzersystem oder Teile hiervon (insbesondere noch fehlende Komponenten des Vernetzersystems) zugesetzt werden. Vorteilhaft können das Vernetzersystem oder Teile hiervon - insbesondere Vernetzer und/oder Beschleuniger - gemeinsam mit den Mikroballons als Mikroballon-Vernetzersystem-Mischung zugemischt werden. In einer Heizzone 32 (beheizbare Mischzone) wird die Polymerschmelze mit den zugesetzten Komponenten und/oder Additiven, jedenfalls den Mikroballons, compoundiert.

Die derart entstandene Schmelzmischung wird über ein weiteres Verbindungsstück oder eine weitere Fördereinheit 37, wie zum Beispiel eine Zahnradpumpe, in eine Düse 5 überführt. Nach Verlassen der Düse 5, also nach Druckabfall, expandieren die eingearbeiteten Mikroballons, so dass eine geschäumte Polymermasse, insbesondere eine geschäumte Selbstklebemasse, entsteht, welche anschließend ausgeformt wird, zum Beispiel mittels eines Walzenkalanders 4 bahnförmig ausgeformt wird (Walzen 41, 42, 43 des Kalanders, Trägermaterial 44, auf das die Polymerschicht aufgelegt wird).

Figur 2

Die Basispolymermasse K wird in einem ersten Aggregat 1, beispielsweise in einem Förderaggregat wie einem Extruder (insbesondere einem Einschneckenförderextruder), aufgeschmolzen und mit diesem als Polymerschmelze über einen beheizbaren Schlauch 11 oder einem ähnlichen Verbindungsstück (zum Beispiel einem Rohr) in ein zweites Aggregat 2, zum Beispiel ein Mischaggregat wie ein Planetwalzenextruder, gefördert. In Figur 2 ist hierfür beispielhaft ein modular aufgebauter Planetwalzenextruder mit vier Modulen, die unabhängig voneinander temperiert werden können vorgesehen ($T_1$, $T_2$, $T_3$, $T_4$).

Über die Dosieröffnung 22 können weitere Komponenten zugegeben werden, hier insbesondere ein geschmolzenes Harz oder eine geschmolzene Harzmischung (zur besseren Vermischbarkeit kann es vorteilhaft sein, im Segment $T_2$, bevorzugt auch im Segment $T_1$ eine hohe Temperatur zu wählen). Ebenso besteht die Möglichkeit, zusätzliche Additive oder Füllstoffe, wie zum Beispiel Farbpasten, über weitere vorhandene Dosierstellen wie 22 im Aggregat 2 zuzuführen (nicht separat eingezeichnet). An der Dosierstelle 23 kann vorteilhaft der Vernetzer hinzugefügt werden. Hierzu ist es vorteilhaft, die Temperatur der Schmelze abzusenken, um die Reaktivität des Vernetzers zu senken und hierdurch die Verarbeitungszeit zu erhöhen (Temperatur im Segment $T_4$ niedrig, vorteilhaft auch im Segment $T_3$ niedrig). Mittels eines beheizbaren Schlauches 24b oder einem ähnlichen Verbindungsstück und einer Schmelzepumpe 24a oder einer anderen Fördereinheit wird die Polymerschmelze in ein drittes Aggregat 3, beispielsweise ein weiteres Mischaggregat wie einen Doppelschneckenextruder, überführt und an Position 33 in dieses Aggregat 3 eingespeist. An der Dosierstelle 34 wird beispielsweise die Beschleunigerkomponente hinzugefügt. Der Doppelschneckenextruder ist vorteilhaft derart ausgelegt, dass er als Entgasungsvorrichtung eingesetzt werden kann. So kann beispielsweise an der dargestellten Stelle die gesamte Mischung in einem Vakuumdom V bei einem Druck von 175 mbar oder weniger von allen Gaseinschlüssen befreit werden. Im Anschluss an die Vakuumzone befindet sich auf der Schnecke ein Blister B (eine insbesondere als umlaufender Spalt, beispielsweise als Ringspalt, ausgebildete Drosselstelle im Extrusionsraum, die insbesondere zur Einstellung des Drucks der im Extruder verarbeiteten Schmelze dient), welcher einen Druckaufbau in dem darauf folgenden Segment S ermöglicht. Durch geeignete Steuerung der Extruderdrehzahl und der dem Extruder nachgeschalteten Fördereinheit, beispielsweise einer Schmelzepumpe 37a, wird in dem Segment S zwischen Blister B und Schmelzepumpe 37a ein Druck von 8 bar oder größer aufgebaut. In diesem Segment S wird an einer Dosierstelle 35 die Mikroballonmischung (Mikroballons eingebettet in eine Flüssigkeit) eingegeben und im Extruder homogen in die Polymermasse eingearbeitet.

Die derart entstandene Schmelzmischung wird mittels der Fördereinheit (Schmelzepumpe 37a und ein Verbindungsstück 37b, zum Beispiel ein Schlauch) in eine Düse 5 überführt. Nach Verlassen der Düse 5, also nach Druckabfall, expandieren die eingearbeiteten Mikroballons, so dass eine geschäumte Polymermasse, insbesondere eine geschäumte Selbstklebemasse S entsteht, welche anschließend ausgeformt wird, zum Beispiel mittels eines Walzenkalanders 4 bahnförmig ausgeformt wird.

Gegenstand der Erfindung sind weiterhin nahezu gasfreie geschäumte Polymermassen - insbesondere als Polymermassenschichten oder als geschäumter Formkörper (beliebiger Ausformung) - bei denen nahezu sämtliche Hohlräume mit je einer eigenen Polymerhülle ausgekleidet sind. Die Polymermassenschichten weisen insbesondere einen Aufbau wie im Rahmen dieser Schrift beschrieben auf; die Formkörper sind beispielweise durch Spritzguss oder ähnliche Verfahren erhältlich. Die Herstellung der Polymermassenschichten bzw. der Formkörper erfolgt insbesondere nach dem erfindungsgemäßen Verfahren.

Die erfindungsgemäßen Produkte sind gekennzeichnet durch die weitgehende Abwesenheit von offenzelligen Hohlräumen, insbesondere von Lufteinschlüssen, in den geschäumten Polymermassen in diesen Produkten. Vorteilhaft weisen die erfindungsgemäßen Polymermassen-Schichten und Formkörper einen Anteil von Hohlräumen ohne eigene Polymerhülle, also offenzellige Kavernen, von nicht mehr als 2 Vol-% auf, insbesondere von nicht mehr als 0,5 Vol.-%. Sehr bevorzugt sind die erfindungsgemäßen Polymermassen-Schichten und Formkörper nahezu gasfrei. Sie weisen insbesondere die oben genannten Raumdichten auf.

Die erfindungsgemäßen geschäumten Produkte, wie insbesondere Transfertapes oder dreischichtige Klebebänder, finden eine Vielzahl von Anwendungen, so zum Beispiel in der Bauindustrie, in der Elektronikindustrie, im Heimwerkerbereich, in der Autoindustrie, im Schiffs-, Boots- und Eisenbahnbau, für Haushaltsgeräte, Möbel und dergleichen. Vorteilhafte Anwendungen sind beispielsweise das Verkleben von Leisten und Emblemen in den vorgenannten Bereichen, das Verkleben von Versteifungsprofilen bei Fahrstühlen, das Verkleben von Bauteilen und Produkten in der Solarindustrie, die Rahmenverklebung bei elektronischen Konsumgütern, wie Fernsehern und dergleichen, Verklebungen bei der Schilderherstellung.

**Experimenteller Teil**

Sofern im einzelnen nichts anderes angegeben ist oder sich ergibt, erfolgen die Angaben der Werte im Rahmen dieser Schrift sowie die Probenvorbereitungen und die Messungen gemäß der folgenden Methoden und unter Standardbedingungen (25 °C, 101325 Pa).

I.1 Dichtebestimmung mittels Pyknometer:

Das Messprinzip beruht auf der Verdrängung der im Pyknometer befindlichen Flüssigkeit. Dabei wird erst das leere bzw. das mit Flüssigkeit gefüllte Pyknometer gewogen und dann der zu vermessende Körper in das Gefäß gegeben.
Aus den Gewichtsunterschieden berechnet sich die Dichte des Körpers:

Es sei

- $m_0$ die Masse des leeren Pyknometers,
- $m_1$ die Masse des mit Wasser gefüllten Pyknometers,
- $m_2$ die Masse des Pyknometers mit dem Festkörper,
- $m_3$ die Masse des Pyknometers mit dem Festkörper, aufgefüllt mit Wasser,
- $\rho_w$ die Dichte des Wassers bei der entsprechenden Temperatur,
- $\rho_F$ die Dichte des Festkörpers.

Dann ergibt sich die Dichte des Festkörpers zu:

$$\rho_F = \frac{(m_2 - m_0)}{(m_1 - m_0) - (m_3 - m_2)} \cdot \rho_W$$

Es wird pro Muster jeweils eine Dreifachbestimmung durchgeführt. Es ist zu beachten, dass bei diesem Verfahren die Rohdichte (bei porösen Festkörpern, vorliegend einem Schaum, die Dichte basierend auf dem Volumen einschließlich der Porenräume) erhalten wird.

I.2. Schnellverfahren Dichtebestimmung über den Masseauftrag und die Schichtdicke:

Das Raumgewicht beziehungsweise die Dichte $\rho$ einer beschichteten Selbstklebemasse wird über das Verhältnis vom Flächengewicht zu der jeweiligen Schichtdicke bestimmt:

$$\rho = \frac{m}{V} = \frac{MA}{d} \qquad [\rho] = \frac{[kg]}{[m^2] \cdot [m]} = \left[\frac{kg}{m^3}\right]$$

MA =  Masseauftrag/Flächengewicht (ohne Linergewicht) in $[kg/m^2]$
d =  Schichtdicke (ohne Linerdicke) in [m]

Auch bei diesem Verfahren wird die Rohdichte erhalten.
Diese Dichtebestimmung eignet sich insbesondere zur Bestimmung der Gesamtdichte fertiger, auch mehrschichtiger, Produkte.

II. Quantitative Ermittlung der Scherfestigkeit: Statischer Schertest SSZ

Ein rechteckiges Prüfmuster der Größe 13 mm x 20 mm des zu prüfenden doppelseitigen Klebebandes wird zwischen zwei Stahlplättchen (50 mm x 25 mm x 2mm; Material nach DIN EN 10088-2, Typ 1, 4301, Oberflächenqualität 2R, kaltgewalzt und blankgeglüht, Ra 25 - 75 nm) so verklebt, dass die Verklebungsfläche des Prüfmusters mit beiden Stahlplättchen je 260 $mm^2$ beträgt, die Stahlplättchen in Längsrichtung versetzt parallel ausgerichtet sind, so dass das Prüfmuster mittig zwischen ihnen verklebt ist und die Stahlplättchen auf unterschiedlichen Seiten über das Prüfmuster hinausragen. Anschließend wird für 1 min mit einem Anpressdruck von 100 $N/cm^2$ verpresst. Nach vorgegebener Aufziehzeit (sofern nicht anders angegeben, 72 Stunden bei Raumtemperatur) werden die so präparierten Prüfkörper mit dem einen über das Prüfmuster hinausragenden Stahlplättchenbereich an einem Schertestmessplatz derart aufgehängt, das die Längsrichtung der Stahlplättchen nach unten ausgerichtet ist, und der über das Prüfmuster hinausragenden Bereich des anderen Stahlplättchens wird bei vorgegebener Temperatur mit einem gewählten Gewicht belastet (Messungen bei Raumtemperatur und mit 20 N Belastung sowie bei 70 °C und mit 10 N Belastung; siehe Angaben in der jeweiligen Tabelle). Prüfklima: Standardbedingungen, 50 % rel. Feuchte. Eine automatische Zähleruhr ermittelt nun die Zeitdauer bis zum Versagen der Prüfmuster in min (Abfallen des belasteten Stahlplättchens).

III. Schälfestigkeit (Klebkraft) KK

Ein Streifen des zu untersuchenden (Selbst-)Klebebandes wird in definierter Breite (Standard: 20 mm) auf einer geschliffenen Stahlplatte (rostfreier Stahl 302 nach ASTM A 666; 50 mm x 125 mm x 1,1 mm; glänzende geglühte Oberfläche; Oberflächenrauhigkeit 50 $\pm$ 25 nm arithmetische Durchschnittsabweichung von der Basislinie) durch zehnmaliges Überrollen mittels einer 5 kg Stahlrolle verklebt. Doppelseitig klebende Klebebänder werden mit einer 36 $\mu$m dicken Hart-PVC-Folie rückseitig verstärkt. Jeweils identische Proben werden hergestellt und entweder für eine Sofortmessung bereitgestellt, 3 Tage gelagert und vermessen bzw. 14 Tage gelagert und vermessen.
Die präparierte Platte wird in das Prüfgerät eingespannt (fixiert) und der Klebestreifen über sein freies Ende an einer Zugprüfmaschine unter einem Schälwinkel von 90° mit einer Geschwindigkeit von 300 mm/min in Längsrichtung des Klebebandes von der Platte abgezogen. Die dafür notwendige Kraft wird ermittelt. Die Messergebnisse sind in N/cm angegeben (Kraft normiert auf die jeweils gelöste Verklebungsstrecke) und über drei Messungen gemittelt. Alle Messungen werden in einem klimatisierten Raum bei 23 °C und 50 % relativer Luftfeuchte durchgeführt.

IV. Dynamischer T-Block Test:

- Bestimmung der Festigkeit von doppelseitigen Klebebändern in z-Richtung -

Die den Stegen gegenüberliegenden Oberflächen (25 mm x 25 mm) der Fußbereiche zweier Aluminiumprofile in T-Form werden mit dem zu prüfenden doppelseitigen Klebeband (quadratischer Zuschnitt, Kantenlänge 25 mm) luftblasenfrei miteinander verklebt und für 15 s mit 110 N verpresst.
Nach einer Aufziehzeit von 24 Stunden bei Raumtemperatur erfolgt die Prüfung. Dazu werden die jeweils in die entgegengesetzte Richtung zeigenden Stege des Klebeverbundes mit einer Zugprüfmaschine mit einer Geschwindigkeit von 300 mm/min auseinander gezogen (Zugrichtung senkrecht zu den verklebten Oberflächen) und die dabei gemessene Maximalkraft als Ergebnis angegeben.

V. Dynamische Scherkraft:

Das zu prüfende doppelseitige Klebeband (Probengröße = 25 x 25mm) wird zwischen zwei Stahlplatten blasenfrei verklebt und für 1 min mit 0,1 kN/cm$^2$ verpresst. Sofort wie auch nach einer Aufziehzeit von 3 Tagen bei Raumtempratur erfolgt jeweils Prüfung. Dazu wird der Probenkörper mit einer Geschwindigkeit von. 50 mm/min in $\gamma$-Richtung auseinander gezogen und die dabei gemessene Maximalkraft als Ergebnis angegeben.

VI.Dynamischer L-jig-Test

- Bestimmung der Ablösekraft von doppelseitigen Klebebändern -

Ein Schenkel eines Stahlblechwinkels in L-Form wird mit dem zu vermessenden doppelseitigen Klebebandmuster (quadratischer Zuschnitt, Kantenlänge je 25 mm) auf eine glatte, polierte ABS-Prüfplatte (ABS: Acrylnitril-Butadien-Styrol-Copolymer) geklebt, so dass die zu prüfende Klebebandseite auf der Prüfplatte liegt und die Verklebungsfläche 25 mm$^2$ beträgt. Die Verklebung wird mittels eines Stahlstempels zur Verfestigung für 5 s mit einem Druck von 60 N beaufschlagt.
Nach einer Aufziehzeit von 24 Stunden bei Raumtemperatur wird der Stahlblechwinkel mit einer Zugprüfmaschine mit einer Geschwindigkeit von 200 mm/min von der Prüfplatte abgezogen und die dabei gemessene Maximalkraft als Ergebnis angegeben.

VII. Statische Glasübergangstemperatur Tg

Die Bestimmung der statischen Glasübergangstemperatur erfolgt über Dynamische Differenzkalorimetrie nach DIN 53765. Die Angaben zur Glasübergangstemperatur Tg beziehen sich auf den Glasumwandlungstemperatur-Wert Tg nach DIN 53765:1994-03, sofern im Einzelfall nichts anderes angegeben ist.

VIII. Molekulargewichte

Die Bestimmung des mittleren Molekulargewichtes $M_w$ und der Polydisperistät D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 $\mu$m, 103 Å (10-7 m), ID 8,0 mm x 50 mm verwendet. Zur Auftrennung wurden die Säulen PSS-SDV, 5 $\mu$m, 103 Å (10-7 m), 105 Å (10-5 m) und 106 Å (10-4 m) mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

IX. Feststoffgehalt:

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

X. K-Wert (nach FIKENTSCHER):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

XI. Bestimmung der Oberflächenrauheit

Das PRIMOS System besteht aus einer Beleuchtungseinheit und einer Aufnahmeeinheit. Die Beleuchtungseinheit projiziert mit Hilfe eines digitalen Mikro-Spiegel-Projektors Linien auf die Oberfläche. Diese projizierten, parallelen Linien werden durch die Oberflächenstruktur abgelenkt beziehungsweise moduliert.
Für die Registrierung der modulierten Linien wird eine, in einem bestimmten Winkel, dem so genannten Triangulationswinkel, angeordnete CCD- Kamera eingesetzt.

| | |
|---|---|
| Messfeldgröße: | 14,5x23,4 mm$^2$ |
| Profillänge: | 20,0 mm |
| Flächenrauheit: | 1,0 mm vom Rand entfernt (Xm = 21,4mm; Ym = 12,5mm) |
| Filterung: | Polynomfilter 3. Ordnung |

Zu beziehen sind entsprechende Messgeräte unter anderem bei der GFMesstechnik GmbH in Teltow.

Verwendete Rohstoffe:

| Chemische Verbindung | Handelsname | Hersteller | CAS-Nr. |
|---|---|---|---|
| Bis-(4-*tert*-butylcyclohexyl)peroxydicarbonat | Perkadox 16 | Akzo Nobel | 15520-11-3 |
| 2,2'-Azobis(2-methylpropionitril), AIBN | Vazo 64 | DuPont | 78-67-1 |
| 2,2'-Azobis(2-methylbutyronitrile) | Vazo 67 | DuPont | 13472-08-7 |
| Pentaerythrittetraglycidether | Polypox R16 | UPPC AG | 3126-63-4 |
| | Denacol EX-411 | Nagase Chemtex Corp. | |
| 3,4-Epoxycyclohexylmethyl-3,4-epoxycyclohexancarboxylat | Uvacure 1500 | Cytec Industries Inc. | 2386-87-0 |
| Triethylentetramin | Epikure 925 | Hexion Speciality Chemicals | 112-24-3 |
| Mikroballons (MB) (trocken-unexpandierte Mikrosphären, Durchmesser 9 - 15 $\mu$m, Expansions-Starttemperatur 106 - 111 °C, TMA-Dichte $\leq$ 25 kg/m$^3$) | Expancel 051 DU 40 | Expancel Nobel Industries | |
| Terpenphenolharz (Ervdeichungspunkt 110 °C; $M_w$ = 500 - 800 g/mol; D = 1,50) | Dertophene T110 | DRT resins | 25359-84-6 |
| Kokosalkylaminethoxylat | Ethomeen C/25 | Akzo Nobel | 61791-14-8 |
| Resorcinol bis(diphenyl Phosphat) | Reofos RDP | Chemtura | 57583-54-7 |
| Wässrige Rußdispersion (wässrige, lösemittelfreie, organische Pigmentpräparation) | Levanyl Schwarz N-LF (Levanyl Black N-LF) | Lanxess | |
| Acrylsäure-n-Butylester | n-Butylacrylat | Rohm & Haas | 141-32-2 |
| Acrylsäure | Acrylsäure rein | BASF | 79-10-7 |
| N-tert. Butylacrylamid | | Linz Chemie | 107-58-4 |
| 2-Ethylhexylacrylat | | Brenntag | 103-11-7 |
| 2-Hydroxyethylmethacrylat | Bisomer HEMA | Cognis | 868-77-9 |
| Methylacrylat | | BASF | 96-33-3 |

(fortgesetzt)

| Chemische Verbindung | Handelsname | Hersteller | CAS-Nr. |
|---|---|---|---|
| Maleinsäureanhydrid | MSA | Condea-Huntsman | 96-33-3 |

Herstellung Basispolymer Ac 1:

Ein für radikalische Polymerisationen konventioneller Reaktor wurde mit 54,4 kg 2-Ethylhexylacrylat, 20,0 kg Methylacrylat, 5,6 kg Acrylsäure und 53,3 kg Aceton/ Isopropanol (94:6) befüllt. Nach 45minütiger Durchleitung von Stickstoffgas unter Rühren wurde der Reaktor auf 58 °C hochgeheizt und 40 g Vazo 67), gelöst in 400 g Aceton, hinzugegeben. Anschließend wurde das äußere Heizbad auf 75 °C erwärmt und die Reaktion konstant bei dieser Außentemperatur durchgeführt. Nach 1 h wurden erneut 40 g Vazo 67, gelöst in 400 g Aceton, zugegeben und nach 4 h wurde mit 10 kg Aceton/Isopropanol-Gemisch (94:6) verdünnt.

Nach 5 h sowie nach 7 h wurde jeweils mit 120 g Bis-(4-tert-butylcyclohexyl)-peroxydicarbonat, jeweils gelöst in 400 g Aceton, nachinitiiert. Nach 22 h Reaktionszeit wurde die Polymerisation abgebrochen und auf Raumtemperatur abgekühlt. Das Produkt hatte einen Feststoffgehalt von 55,9 % und wurde getrocknet. Das resultierende Polyacrylat hatte einen K-Wert von 58,8, ein mittleres Molekulargewicht von Mw = 746.000 g/mol, eine Polydispersität von D (Mw/Mn) = 8,9 und eine statische Glasübergangstemperatur von Tg = - 35,6 °C.

Herstellung Basispolymer Ac2

Ein für radikalische Polymerisationen konventioneller Reaktor wurde mit 30,0 kg 2-Ethylhexylacrylat, 67,0 kg Butylacrylat, 3,0 kg Acrylsäure und 66,7 kg Aceton/ Isopropanol (96:4) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Bis-(4-tert-butylcyclohexyl)peroxydicarbonat, gelöst in 500 g Aceton, zugegeben; nach 6 h 30 min wurde erneut mit 10 kg Aceton/Isopropanol-Gemisch (96:4) verdünnt. Nach 7 h wurden weitere 150 g Bis-(4-tert-butylcyclohexyl)peroxydicarbonat, gelöst in 500 g Aceton, zugegeben und das Heizbad auf eine Temperatur von 60 °C eingeregelt.

Nach 22 h Reaktionszeit wurde die Polymerisation abgebrochen und auf Raumtemperatur abgekühlt. Das Produkt hatte einen Feststoffgehalt von 50,2 % und wurde getrocknet. Das resultierende Polyacrylat hatte einen K-Wert von 75,2, ein mittleres Molekulargewicht von Mw = 1 370 000 g/mol, eine Polydispersität von D (Mw/Mn) = 17,13 und eine statische Glasübergangstemperatur von Tg = - 38.0 °C.

Polyacrylathaftkleber PAHK:

Ein für radikalische Polymerisationen konventioneller 100 L-Glasreaktor wurde mit 4,8 kg Acrylsäure, 11,6 kg Butylacrylat, 23,6 kg 2-Ethylhexylacrylat und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 h und 8 h wurde mit jeweils 10,0 kg Aceton/Benzin 60/95 (1:1) Gemisch verdünnt. Zur Reduktion der Restinitiatoren wurden nach 8 h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,2 Gew.-% Uvacure® 1500 abgemischt, auf einen Feststoffgehalt von 30 % mit Aceton verdünnt und dann aus Lösung auf eine silikonisierte Trennfolie (50 $\mu$m Polyester) bzw. auf eine 23 $\mu$m dicke geätzte PET-Folie beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) Der Masseauftrag betrug 50 g/m$^2$.

Herstellung von Mikroballonmischungen:

Die Mikroballons werden in ein Behältnis gegeben, in welches eine flüssige Komponente (Dispergiermittel) gemäß der Angabe bei den einzelnen Beispielen vorgelegt wurde. In einem Planetenrührwerk der Firma pc-laborsystem bei einem Druck von 5 mbar und einer Drehzahl von 600 rpm für 30 min gerührt.

Herstellung geschäumte Masse:

Die Schäumung findet in einer Versuchsanlage statt, die der Darstellung in Fig. 2 entspricht.

Das entsprechende Basispolymer K (Ac1 bzw. Ac2; siehe Tabellen) wird in einem Fütterextruder 1 (Einschneckenförderextruder der Firma TROESTER GmbH & Co KG, Deutschland) aufgeschmolzen und mit diesem als Polymerschmelze über einen beheizbaren Schlauch 11 in einen Planetwalzenextruder 2 der Firma Entex (Bochum) gefördert (es wurde insbesondere ein PWE mit vier unabhängig voneinader heizbaren Modulen $T_1$, $T_2$, $T_3$, $T_4$ eingesetzt). Über die Dosieröffnung 22 wird nun das geschmolzene Harz zugegeben. Weiterhin besteht die Möglichkeit, zusätzliche Additive oder Füllstoffe, wie z.B. Farbpasten, über weitere vorhandene Dosierstellen zuzuführen. An Punkt 23 wird der Vernetzer hinzugefügt. Alle Komponenten werden zu einer homogenen Polymerschmelze gemischt.

Mittels einer Schmelzepumpe 24a und eines beheizbaren Schlauches 24b wird die Polymerschmelze in einen Doppelschneckenextruder 3 (Firma Berstorf) überführt (Eingabeposition 33). An Position 34 wird die Beschleunigerkomponete hinzugefügt. Anschließend wird die gesamte Mischung in einem Vakuumdom V bei einem Druck von 175 mbar von allen Gaseinschlüssen befreit (Kriterium für Gasfreiheit siehe oben). Im Anschluß an die Vakuumzone befindet sich auf der Schnecke ein Blister B, welcher einen Druckaufbau in dem darauf folgenden Segment S ermöglicht. Durch geeignete Steuerung der Extruderdrehzahl und der Schmelzepumpe 37a wird in dem Segment S zwischen Blister B und Schmelzepumpe 37a ein Druck von größer 8 bar aufgebaut, an der Dosierstelle 35 die Mikroballonmischung (Mikroballons eingebettet in das Dispergierhilfsmittel gemäß der Angaben bei den Versuchsreihgen) hinzugefügt und mittels eines Mischelements homogen in die Vormischung eingearbeitet. Die entstandene Schmelzmischung wird in eine Düse 5 überführt.

Nach Verlassen der Düse 5, also nach Druckabfall, expandieren die eingearbeiteten Mikroballons, wobei durch den Druckabfall eine scherungsarme, insbesondere scherungsfreie, Abkühlung der Polymermasse erfolgt. Es entsteht eine geschäumte Selbstklebemasse S, welche anschließend mittels eines Walzenkalanders 4 bahnförmig ausgeformt wird.

Beispiele:

Versuchsreihe 1: Variation der Mikroballon-Menge

Dispergierhilfsmittel Ethomeen C/25

| Sample | | | | A | B | C |
|---|---|---|---|---|---|---|
| **Komponenten** | **Ac 1**<br>**Dertophene T110**<br>**Expancel 051 DU 40**<br>**Ethomeen C/25**<br>**Levanyl N-LF**<br>**Polypox R16**<br>**Epikure 925**<br>**Reofos RDP** | | [w-%] | 68,7<br>28,3<br>**0,7**<br>**0,84**<br>0,5<br>0,139<br>0,144<br>0,66 | 67,0<br>28,3<br>**1,5**<br>**1,80**<br>0,5<br>0,139<br>0,144<br>0,66 | 65,9<br>28,3<br>**2,0**<br>**2,40**<br>0,5<br>0,139<br>0,144<br>0,66 |
| **Aufbau** | **Dicke**<br>**Dichte (1.2)** | | [μm]<br>[kg/m³] | 1092<br>944 | 1158<br>811 | 1091<br>770 |
| **Performance** | **SSZ (II)**<br><br><br>**Schälfestigkeit (III)**<br><br>**Dyn. T-Block-Test (IV)** | Rt 20N<br>70°C10N<br>sofort<br>3d<br>14d<br>24 h Rt | [min]<br><br>[N/cm]<br><br><br>[N/cm²] | 1665<br>31<br>23,4 A<br>38,4 A<br>35,1 A<br>131,6 A | 940<br>17<br>19,9 A<br>33,9 A<br>30,9 A<br>134,1 A | 1016<br>20<br>18,3 A<br>30,6 A<br>29,9 A<br>124,2 A |

Versuchsreihe 2: Variation der Harzmenge

Dispergierhilfsmittel Ethomeen C/25

| Sample | | | | C | D | E | F |
|---|---|---|---|---|---|---|---|
| **Komponenten** | **Ac 1**<br>**Dertophene T110**<br>**Expancel 051 DU 40**<br>**Ethomeen C/25**<br>**Levanyl N-LF**<br>**Polypox R16**<br>**Epikure 925**<br>**Reofos RDP** | | [w-%] | 65,9<br>**28,3**<br>2,0<br>2,45<br>0,5<br>0,139<br>0,144<br>0,66 | 63,1<br>**31,0**<br>2,0<br>2,45<br>0,5<br>0,139<br>0,144<br>0,66 | 59,1<br>**35,0**<br>2,0<br>2,45<br>0,5<br>0,139<br>0,144<br>0,66 | 56,1<br>**38,0**<br>2,0<br>2,45<br>0,5<br>0,139<br>0,144<br>0,66 |
| **Aufbau** | **Dicke**<br>**Dichte (1.2)** | | $[\mu m]$<br>$[kg/m^3]$ | 1091<br>770 | 1109<br>753 | 1123<br>744 | 1130<br>752 |
| **Performance** | **SSZ (II)**<br><br>**Schälfestigkeit (III)**<br><br><br>**Dyn. T-Block-Test (IV)** | Rt 20N<br>70°C10N<br>sofort<br>3d<br>14d<br>24 h Rt | [min]<br><br>[N/cm]<br><br><br>$[N/cm^2]$ | 1016<br>20<br>18,3 A<br>30,6 A<br>29,9 A<br>124,2 A | 1275<br>28<br>24,5 A<br>33,4 A<br>35,1 A<br>123,2 A | 1753<br>39<br>31,0 A<br>43,1 A<br>42,7 A<br>137,2 A | 3309<br>31<br>36,5 A<br>48,2 A<br>49,2 A<br>140,0A |

Versuchsreihe 3: Dichtenkonstanz

Dispergierhilfsmittel Reofos RDP

| Sample | | | | G | H |
|---|---|---|---|---|---|
| **Komponenten** | **Ac 1**<br>**Dertophene T110**<br>**Expancel 051 DU 40**<br>**Levanyl N-LF**<br>**Polypox R16**<br>**Epikure 925**<br>**Reofos RDP** | | [w.-%] | 69,6<br>28,3<br>**0,7**<br>0,5<br>0,139<br>0,144<br>0,66 | 65,5<br>28,3<br>**2,0**<br>0,5<br>0,139<br>0,144<br>3,40 |
| **Aufbau** | **Dicke**<br>**Dichte (1.2)** | | $[\mu m]$<br>$[kg/m^3]$ | 1105<br>780 | 1100<br>775 |
| **Performance** | **SSZ (II)**<br><br>**Schälfestigkeit (III)**<br><br>**Dyn. L-jig Test (VI)**<br>**Dyn. T-Block-Test(IV)**<br>**Dyn. Scherkraft (V)** | RT 20N<br>70°C 10N<br>sofort<br>3d<br>24 h RT<br>24 h RT<br>sofort<br>3d | [min]<br><br>[N/cm]<br><br>[N/cm]<br>$[N/cm^2]$<br><br>$[N/cm^2]$ | 468<br>47<br>19,0 A<br>34,2 A<br>114,2<br>95,3 A<br>77,4<br>88,3 | 347<br>53<br>17,3 A<br>29,7 A<br>116,3<br>123,5 A<br>91,2<br>108,4 |

Versuchsreihe 4: Dichtenkonstanz

Dispergierhilfsmittel Ethomeen C/25 und/oder Reofoss RDP

| Sample | | | | G | C |
|---|---|---|---|---|---|
| **Komponenten** | **Ac 1**<br>**Dertophene T110**<br>**Expancel 051 DU 40**<br>**Ethomeen C/25**<br>**Levanyl N-LF**<br>**Polypox R16**<br>**Epikure 925**<br>**Reofos RDP** | | [w-%] | 69,6<br>28,3<br>**0,7**<br>-----<br>0,5<br>0,139<br>0,144<br>0,66 | 65,9<br>28,3<br>**2,0**<br>**2,40**<br>0,5<br>0,139<br>0,144<br>0,66 |
| **Aufbau** | **Dicke Dichte (1.2)** | | [µm] [kg/m³] | 1105 780 | 1091 770 |
| **Performance** | **SSZ (II)**<br><br>**Schälfestigkeit (III)**<br><br>**n. L-jig Test (VI)**<br>**Dyn. T-Block-Test (IV)**<br><br>**Dyn. Scherkraft (V)** | RT 20N<br>70°C 10N<br>sofort<br>3d<br>24 h RT<br>24 h RT<br>sofort<br>3d | [min]<br><br>[N/cm]<br><br>[N/cm]<br>[N/cm²]<br><br>[N/cm²] | 468<br>47<br>19,0 A<br>34,2 A<br>114,2<br>95,3 A<br>77,4<br>88,3 | 347<br>53<br>18,3 A<br>30,6 A<br>116,3<br>124,2 A<br>91,2<br>108,4 |

Versuchsreihe 5:

Dispergierhilfsmittel Levanyl N-LF

Auf die Muster wird vor der Vermessung beidseitig der Polyacrylathaftkleber PAHK kaschiert

| Sample | | | | I |
|---|---|---|---|---|
| **Komponenten** | **Ac 2**<br>**Expancel 051 DU 40**<br>**Levanyl N-LF**<br>**P lyp x R16**<br>**Epikure 925**<br>**Re fos RDP** | | [w-%] | 94,4<br>**2,0**<br>2,76<br>0,222<br>0,144<br>0,48 |

| Sample | | | | I |
|---|---|---|---|---|
| **Aufbau** | **Dicke**<br>**Dichte (1.2)** | | [µm]<br>[kg/m³] | 1734<br>680 |
| **Performance** | **SSZ (II)**<br><br>**Schälfestigkeit (III)**<br><br>**Dyn. T-Block-Test (IV)** | RT 10N<br>70°C 5N<br>sofort<br>3d<br>24 h RT | [min]<br><br>[N/cm]<br><br>[N/cm²] | 3147<br>2954<br>21,0 A<br>64,3 K<br>47,0 A |

21

Versuchsreihe 6:

Dispergierhilfsmittel Ethomeen C/25

Auf die Muster wird vor der Vermessung beidseitig der Polyacrylathaftkleber PAHK kaschiert

| Sample | | | | J | K | L |
|---|---|---|---|---|---|---|
| Komponenten | Ac 2 | | [w-%] | 93,7 | 91,4 | 86,9 |
| | Expancel 051 DU 40 | | | **2,0** | **3,0** | **5,0** |
| | Ethomeen C/25 | | | **2,45** | **3,67** | **6,11** |
| | Levanyl N-LF | | | 1,0 | 1,1 | 1,1 |
| | Polypox R16 | | | 0,222 | 0,222 | 0,222 |
| | Epikure 925 | | | 0,144 | 0,144 | 0,144 |
| | Reofos RDP | | | 0,48 | 0,48 | 0,48 |
| Aufbau | Dicke | | [$\mu$m] | 1030 | 1030 | 870 |
| | Dichte (1.2) | | [kg/m$^3$] | 828 | 740 | 654 |
| Performance | SSZ (II) | RT 10N | [min] | 3074 | 4273 | 3162 |
| | | 70°C 5N | | 1277 | 589 | 263 |
| | | sofort | | 17,0 A | 17,8 A | 18,2 A |
| | Schälfestigkeit (III) | 3d | [N/cm] | 35,4 A | 30,6A | 26,1 A |
| | | 14d | | 35,0 A | 33,4 A | 28,5 A |
| | Dyn. T-Block-Test (IV) | 24 h RT | [N/cm$^2$] | 52,2 A | 43,1 A | 38,6 A |

Die vorstehenden Versuchsreihen belegen die hervorragenden Eigenschaften der erfinduns gemäß hergestellten Produkte.

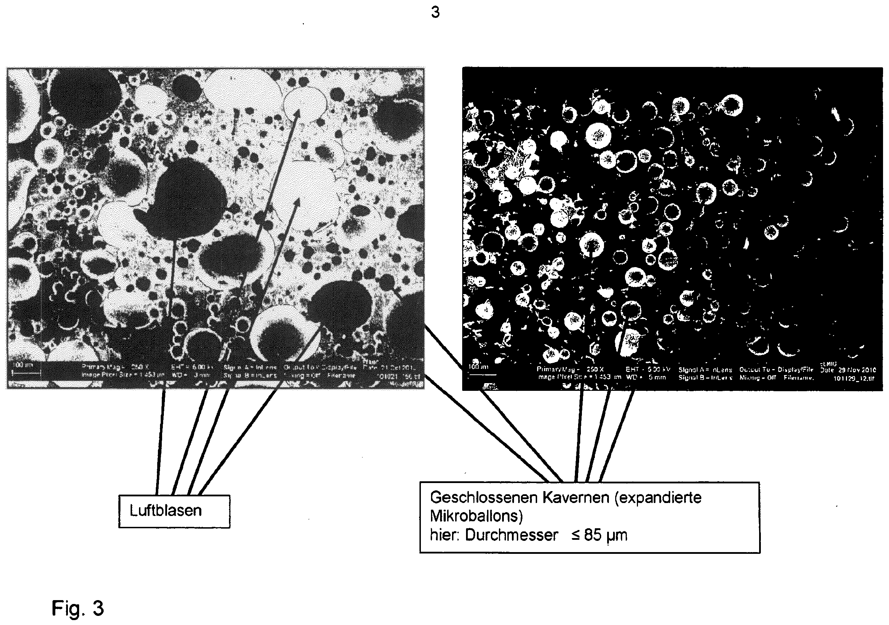

Fig. 3 zeigt in einer rasterelektronenmikroskopischen Aufnahme einen Schnitt durch ein handelsübliches mit Mikroballons geschäumtes Produkt (links) sowie ein durch einen Schnitt durch ein erfindungsgemäß hergestelltes Produkt (rechts) gemäß Beispiel G. Es ist zu erkennen, dass das erfindungsgemäße Produkt ausschließlich Kavernen aus expandierten Mikroballons aufweist. Die Größenverteilung der Kavernen ist eng. Die schwarzen Flächen sind bei der Herstellung des Schnitts aufgeschnittene Kavernen und aus der Oberfläche herausgerissene Mikroballons. Die Farbe der Mikroballons beruht auf deren Lage in der Polymermatrix.

Am handelsüblichen Vergleichsbeispiel ist zu erkennen, dass neben den Mikroballon-Kavernen weitere, in der Regel größere und weniger regelmäßig geformte Kavernen in erheblichem Anteil auftreten. Hierbei handelt es sich um eingeschlossene Luftblasen.

Bezugszeichenliste

| | |
|---|---|
| 1 | erstes Aggregat (Förderaggregat), z.B. Einschneckenextruder |
| 11 | beheizbares Verbindungsstück, z.B. Schlauch oder Rohr |
| 2 | zweites Aggregat (Mischaggregat), z.B. Doppelschnecken- oder Planetwalzenextruder |
| 21 | temperierbare Mischzone |
| 22 | Eingabeöffnung |
| 23 | Dosieröffnung |
| 24 | Fördervorrichtung |
| 24a | Fördereinheit, insbesondere Schmelzepumpe |
| 24b | beheizbares Verbindungsstück, z.B. Schlauch oder Rohr |
| 3 | drittes Aggregat (Mischaggregat), z.B. Doppelschnecken- oder Planetwalzenextruder |
| 31 | temperierbare Mischzone |
| 32 | temperierbare Mischzone / Heizzone |
| 33 | Eingabeöffnung |
| 34, 35 | Dosieröffnung |
| 36 | Gleitdichtring |

| 37 | Fördervorrichtung |
| 37a | Fördereinheit, insbesondere Schmelzepumpe |
| 37b | beheizbares Verbindungsstück, z.B. Schlauch oder Rohr |
| 4 | Walzenwerk, z.B. Walzenkalander |
| 41, 42, 42 | Walzen des Walzenwerks |
| 44 | Trägermaterial |
| $T_1$, $T_2$, $T_3$, $T_4$ | unabhängig voneinander temperierbare Mischaggregatmodule |
| B | Drosselstelle, insbesondere Blister |
| S | Mischaggregatsegment zur Eingabe der Mikroballons |
| V | Vakuumdom |
| 5 | Düse |

## Patentansprüche

1. Verfahren zur Herstellung einer schäumbaren Polymermasse unter Verwendung expandierbarer Mikrohohlkugeln, **gekennzeichnet dadurch, dass** das Verfahren mit zwei separaten Verfahrenssträngen beginnt, wobei

- nur in einem der beiden separaten Verfahrensstränge expandierbare Mikrohohlkugeln eingesetzt sind;
- in einem ersten Verfahrensstrang erste Ausgangsstoffe, zu denen zumindest der überwiegende Teil des oder der zu verwendenden Polymeren gehört, zu einer Vormischung vermischt und entgast werden;
- in einem zweiten Verfahrensstrang zweite Ausgangsstoffe, zu denen die zu verwendenden Mikrohohlkugeln gehören, entgast werden;
- die Vormischung mit einem solchen Druck beaufschlagt wird, dass die Paarung dieses Druckes mit der Temperatur der Vormischung unterhalb der für die Expansionsauslösung der zu verwendenden Mikrohohlkugeln kritischen Paarung von Druck und Temperatur liegt; und
- die im zweiten Verfahrensstrang behandelten Ausgangsstoffe der Vormischung bei dieser unterhalb der für die Expansionsauslösung der zu verwendenden Mikrohohlkugeln kritischen Paarung von Druck und Temperatur zugesetzt werden,
- wonach die zweiten Ausgangsstoffe in der Vormischung vermischt werden.

2. Verfahren nach Anspruch 1, **dadurch gekennzeichnet, dass** die Entgasung zumindest der expandierbaren Mikrohohlkugeln im zweiten Verfahrensstrang ohne Unterdruckanwendung auskommt, nämlich durch Tränken der expandierbaren Mikrohohlkugeln in einer Flüssigkeit, vorzugsweise Öl.

3. Verfahren nach zumindest einem der vorgenannten Ansprüche, **dadurch gekennzeichnet, dass** die Temperatur der Vormischung beim Zusetzen der zweiten Ausgangsstoffe so hoch ist, dass sie gepaart mit dem Umgebungsdruck die Expansion der zu expandierbaren Mikrohohlkugeln auslösen würde

4. Verfahren nach zumindest einem der vorangehenden Ansprüche, **dadurch gekennzeichnet, dass** nach dem Zusetzen der zweiten Ausgangsstoffe in die Vormischung durch Überdruck eine unterkritische Paarung von Druck und Temperatur - also eine solche Paarung, die unterhalb der für die Expansionsauslösung der zu verwendenden Mikrohohlkugeln kritischen Paarung von Druck und Temperatur liegt - erreicht und zumindest solange aufrecht erhalten bleibt, bis eine homogene Verteilung der weiteren Ausgangsstoffe in der Vormischung erreicht ist.

5. Verfahren nach zumindest einem der vorangehenden Ansprüche, **dadurch gekennzeichnet**, dass die Vermischung der Vormischung mit den Mikrohohlkugeln in einer Mischvorrichtung erfolgt, vorzugsweise in einem Extruder mit einer Düse an dessen Ende, wobei eine unterkritische Paarung von Druck und Temperatur bis zum Verlassen der Mischvorrichtung aufrecht erhalten bleibt, sodass die Expansion der Mikrohohlkugeln erst mit Verlassen der Mischvorrichtung einsetzt.

6. Verfahren nach zumindest einem der vorangehenden Ansprüche, **dadurch gekennzeichnet, dass** im zweiten Verfahrensstrang die weiteren Ausgangsstoffe in einer Flüssigkeit suspendiert werden.

7. Verfahren nach Anspruch 6, **dadurch gekennzeichnet, dass** die Flüssigkeit, in die die Ausgangsstoffe des zweiten Verfahrensstranges suspendiert werden, so gewählt ist, dass sie bei keiner der nach der Zusammenführung des zweiten Verfahrensstranges mit dem ersten Verfahrensstrang auftretenden Paarung von Druck und Temperatur zur Gasblasenbildung in der Polymermasse führen.

8. Verfahren nach zumindest einem der vorangehenden Ansprüche, **dadurch gekennzeichnet, dass** als AusgangsstoffefürdiePolymermasse überwiegend Polyacrylate, Polyolefine, Naturkautschuke und/oder Synthesekautschuke eingesetzt werden, deren gewichtsmittleres Molekulargewicht $M_w$ mehr als 500 000 g/mol, bevorzugt mehr als 600 000 g/mol, besonders bevorzugt mehr als 700 000.g/mol beträgt.

9. Verfahren zum Schäumen einer schäumbaren Polymermasse nach Herstellung einer schäumbaren Polymermasse nach zumindest einem der vorangehenden Ansprüche, **dadurch gekennzeichnet, dass** die Expansion der Mikrohohlkugeln nach dem Mischen erfolgt, vorzugsweise unter gleichzeitiger Abkühlung der Polymermasse.

10. Verfahren nach Anspruch **9, dadurch gekennzeichnet, dass** die Polymermasse nach erfolgter Expansion der Mikrohohlkugeln in einem Walzenwerk zur Schicht ausgeformt wird.

11. Verfahren nach Anspruch 9 oder 10, **dadurch gekennzeichnet, dass** die Polymermasse - und zwar zumindest überwiegend erst nach der Expansion, vorzugsweise überwiegend erst nach der Ausformung zur Schicht - vernetzt wird

12. Verfahren nach zumindest einem der Ansprüche 9, 10 oder 11, **dadurch gekennzeichnet, dass** die Vernetzung vermittels thermisch aktivierbarer Vernetzer erreicht wird, insbesondere unter Vermeidung einer Anwendung von UV-Strahlen und/oder von Elektronenstrahlen.

13. Verfahren nach Anspruch 12, **dadurch gekennzeichnet, dass** als thermisch aktivierbare Vernetzer Isocyanate, Epoxide in Verbindung mit Aminbeschleunigern und/oder epoxidierte Cyclohexylderivate eingesetzt werden.

14. Verfahren nach einem der vorangehenden Ansprüche, **dadurch gekennzeichnet, dass** damit eine permanent klebrige, geschäumte und zumindest nahezu gasfreie Polymermasse hergestellt wird.

15. Geschäumte Polymermasse umfassend expandierte Mikrohohlkugeln, insbesondere erhältlich nach einem der vorhergehenden Verfahren, **dadurch gekennzeichnet, dass** der Anteil an Kavernen ohne eigene Polymerhülle nicht mehr als 2 Vol.-%, bevorzugt nicht mehr als 0,5 Vol.-% beträgt.

**Claims**

1. Process for preparing a foamable polymer composition using expandable hollow microbeads, **characte rized** in that the process begins with two separate process strands, with

   - expandable hollow microbeads being used only in one of the two separate process strands;
   - in a first process strand, first starting materials, which include at least the predominant portion of the polymer or polymers to be used, being mixed and degassed to give a premix;
   - in a second process strand, second starting materials, including the hollow microbeads to be used, being degassed;
   - the premix being subjected to a pressure such that the pairing of this pressure with the temperature of the premix is below the critical pairing of pressure and temperature for triggering the expansion of the hollow microbeads to be used; and
   - the starting materials treated in the second process strand being added to the premix at this pairing which is below the critical pairing of pressure and temperature for triggering the expansion of the hollow microbeads to be used,
   - after which the second starting materials are mixed in the premix.

2. Process according to Claim 1, **characterized in that** the degassing at least of the expandable hollow microbeads in the second process strand is accomplished without application of reduced pressure, specifically by impregnating of the expandable hollow microbeads in a liquid, preferably oil.

3. Process according to at least one of the preceding claims, **characterized in that** the temperature of the premix when the second starting materials are added is sufficiently high that, when paired with the ambient pressure, it would trigger the expansion of the hollow microbeads to be expanded.

4. Process according to at least one of the preceding claims, **characterized in that**, following the addition of the second starting materials to the premix, a subcritical pairing of pressure and temperature - that is, a pairing which is below the critical pairing of pressure and temperature for triggering the expansion of the hollow microbeads to be used - is achieved by elevated pressure and remains maintained at least until a homogeneous distribution of the further starting materials in the premix has been achieved.

5. Process according to at least one of the preceding claims, **characterized in that** the mixing of the premix with the hollow microbeads takes place in a mixing apparatus, preferably in an extruder having a die at its end, where a subcritical pairing of pressure and temperature remains maintained until departure from the mixing apparatus, and so the expansion of the hollow microbeads begins only on departure from the mixing apparatus.

6. Process according to at least one of the preceding claims, **characterized in that**, in the second process strand, the further starting materials are suspended in a liquid.

7. Process according to Claim 6, **characterized in that** the liquid into which the starting materials of the second process strand are suspended is selected such that it does not lead to the formation of gas bubbles in the polymer composition for any of the pressure and temperature pairings that occur after the second process strand has been merged with the first process strand.

8. Process according to at least one of the preceding claims, **characterized in that** starting materials used for the polymer composition are predominantly polyacrylates, polyolefins, natural rubbers and/or synthetic rubbers, whose weight-average molecular weight $M_w$ is more than 500 000 g/mol, preferably more than 600 000 g/mol, more preferably more than 700 000 g/mol.

9. Process for foaming a foamable polymer composition following preparation of a foamable polymer composition according to at least one of the preceding claims, **characterized** in that the expansion of the hollow microbeads takes place after mixing, preferably with simultaneous cooling of the polymer composition.

10. Process according to Claim 9, **characterized in that**, after expansion of the hollow microbeads has taken place, the polymer composition is shaped to a layer in a roll mill.

11. Process according to Claim 9 or 10, **characterized in that** the polymer composition is crosslinked, this crosslinking taking place at least predominantly only after the expansion, preferably predominantly only after the shaping to a layer.

12. Process according to at least one of Claims 9, 10 and 11, **characterized in that** the crosslinking is achieved by means of thermally activatable crosslinkers, more particularly with avoidance of application of UV rays and/or electron beams.

13. Process according to Claim 12, **characterized in that** thermally activatable crosslinkers used are isocyanates, epoxides in conjunction with amine accelerants, and/or epoxidized cyclohexyl derivatives.

14. Process according to any of the preceding claims, **characterized in that** a permanently tacky, foamed and at least virtually gas-free polymer composition is prepared therewith.

15. Foamed polymer composition comprising expanded hollow microbeads, more particularly obtainable according to any of the preceding processes, **characterized in that** the fraction of caverns without their own polymer shell is not more than 2% by volume, preferably not more than 0.5% by volume.

**Revendications**

1. Procédé pour la préparation d'une masse de polymère moussable, en utilisant des microbilles creuses expansibles, **caractérisé en ce que** le procédé démarre par deux lignes de procédé séparées, où

- les microbilles creuses expansibles ne sont utilisées que dans une des deux lignes de procédé séparées ;
- on mélange et on dégaze dans une première ligne de procédé des premières substances de départ, parmi lesquelles on compte au moins la partie principale du ou des polymères à utiliser ;
- on dégaze dans une deuxième ligne de procédé des deuxièmes substances de départ, parmi lesquelles on compte les microbilles creuses à utiliser ;

- le prémélange est soumis à une pression telle que l'association de cette pression et de la température du prémélange se situe sous l'association de pression et de température qui est critique pour le déclenchement de l'expansion des microbilles creuses à utiliser ; et
- les substances de départ traitées dans la deuxième ligne de procédé sont ajoutées au prémélange à cette association inférieure à l'association de pression et de température qui est critique pour le déclenchement de l'expansion des microbilles creuses à utiliser,
- after which the second starting materials are mixed in the premix.

2. Procédé selon la revendication 1, **caractérisé en ce que** le dégazage au moins des microbilles creuses expansibles dans la deuxième ligne de procédé a lieu sans utilisation de dépression, à savoir par immersion des microbilles creuses expansibles dans un liquide, de préférence de l'huile.

3. Procédé selon au moins l'une quelconque des revendications précédentes, **caractérisé en ce que** la température du prémélange, lors de l'addition des deuxièmes substances de départ, se situe à un niveau tel que, si elle était associée à la pression ambiante, elle déclencherait l'expansion des microbilles creuses utilisées.

4. Procédé selon au moins l'une quelconque des revendications précédentes, **caractérisé en ce qu'**après l'addition des deuxièmes substances de départ dans le prémélange, on obtient par surpression une association inférieure à l'association critique de pression et de température - c'est-à-dire un association qui se situe sous l'association de pression et de température qui est critique pour le déclenchement de l'expansion des microbilles creuses à utiliser - et on maintient celle-ci au moins jusqu'à ce qu'on atteigne une répartition homogène des autres substances de départ dans le prémélange.

5. Procédé selon au moins l'une quelconque des revendications précédentes, **caractérisé en ce que** le mélange du prémélange avec les microbilles creuses a lieu dans un dispositif de mélange, de préférence dans une extrudeuse présentant une filière à son extrémité, une association de pression et de température inférieure à l'association critique étant maintenue jusqu'à la sortie du dispositif de mélange, de telle sorte que l'expansion de microbilles creuses ne démarre qu'à la sortie du dispositif de mélange.

6. Procédé selon au moins l'une quelconque des revendications précédentes, **caractérisé en ce que** les autres substances de départ sont mises en suspension dans un liquide dans la deuxième ligne de procédé.

7. Procédé selon la revendication 6, **caractérisé en ce que** le liquide dans lequel les substances de départ de la deuxième ligne de procédé sont mises en suspension est choisi de manière telle qu'il ne conduit pas, à aucune des associations de pression et de température qui surviennent lors de la réunion de la deuxième ligne de procédé avec la première ligne de procédé, à une formation de bulles de gaz dans la masse de polymère.

8. Procédé selon au moins l'une quelconque des revendications précédentes, **caractérisé en ce qu'**on utilise comme substances de départ pour la masse de polymère principalement des polyacrylates, des polyoléfines, des caoutchoucs naturels et/ou des caoutchoucs de synthèse, dont le poids moléculaire pondéral moyen $M_w$ est supérieur à 500 000 g/mole, de préférence supérieur à 600 000 g/mole, de manière particulièrement préférée supérieur à 700 000 g/mole.

9. Procédé pour le moussage d'une masse de polymère moussable après préparation d'une masse de polymère moussable selon au moins l'une quelconque des revendications précédentes, **caractérisé en ce que** l'expansion des microbilles creuses a lieu après le mélange, de préférence sous un refroidissement simultané de la masse de polymère.

10. Procédé selon la revendication 9, **caractérisé en ce que** la masse de polymère est façonnée dans un laminoir en une couche après la fin de l'expansion des microbilles creuses.

11. Procédé selon la revendication 9 ou 10, **caractérisé en ce que** la masse de polymère est réticulée et ce au moins principalement seulement après l'expansion, de préférence au moins principalement seulement après le façonnage en couche.

12. Procédé selon au moins l'une quelconque des revendications 9, 10 ou 11, **caractérisé en ce que** la réticulation est réalisée au moyen de réticulants thermoactivables, en particulier en évitant l'utilisation de rayons UV et/ou de rayons électroniques.

**13.** Procédé selon la revendication 12, **caractérisé en ce qu'**on utilise comme réticulants thermoactivables des isocyanates, des époxydes en association avec des accélérateurs à base d'amine et/ou des dérivés époxydés de cyclohexyle.

**14.** Procédé selon l'une quelconque des revendications précédentes, **caractérisé en ce qu'**on prépare à l'aide de ce procédé une masse de polymère adhésive permanente, moussée et au moins pratiquement exempte de gaz.

**15.** Masse de polymère moussée comprenant des microbilles creuses expansées, pouvant en particulier être obtenue selon un des procédés ci-dessus, **caractérisée en ce que** la proportion de creux sans enveloppe polymère propre n'est pas supérieure à 2% en volume, de préférence pas supérieure à 0,5% en volume.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2105877 C
- EP 1102809 A1
- DE 19531631 A1
- DE 102009015233
- EP 0752435 A
- EP 1802722 A
- EP 1791921 A
- EP 1791922 A
- EP 1978069 A
- DE 102008059050 A